(19) Europäisches Patentamt
European Patent Office
Office européen des brevets

(11) **EP 1 523 730 B1**

(12) **FASCICULE DE BREVET EUROPEEN**

(45) Date de publication et mention
de la délivrance du brevet:
**25.03.2009 Bulletin 2009/13**

(21) Numéro de dépôt: **02747503.7**

(22) Date de dépôt: **05.06.2002**

(51) Int Cl.:
***G06T 1/00*** *(2006.01)*

(86) Numéro de dépôt international:
**PCT/FR2002/001907**

(87) Numéro de publication internationale:
**WO 2003/007238 (23.01.2003 Gazette 2003/04)**

(54) **PROCEDE ET SYSTEME POUR CALCULER UNE IMAGE TRANSFORMEE A PARTIR D'UNE IMAGE NUMERIQUE**

VERFAHREN UND SYSTEM ZUR UMSETZUNG EINES BILDES AUS EINEM DIGITALEN BILD

METHOD AND SYSTEM FOR CALCULATING A TRANSFORMED IMAGE FROM A DIGITAL IMAGE

(84) Etats contractants désignés:
**AT BE CH CY DE DK ES FI FR GB GR IE IT LI LU MC NL PT SE TR**

(30) Priorité: **12.07.2001 FR 0109291**
**12.07.2001 FR 0109292**
**02.10.2001 FR 0112664**

(43) Date de publication de la demande:
**20.04.2005 Bulletin 2005/16**

(73) Titulaire: **DO LABS**
**92100 Boulogne Billancourt (FR)**

(72) Inventeurs:
• **CHAUVILLE, Benoît**
**F-75011 Paris (FR)**
• **GUICHARD, Frédéric**
**F-75012 Paris (FR)**
• **LAVEST, Jean-Marc**
**63200 Riom (FR)**
• **LIEGE, Bruno**
**92100 Boulogne (FR)**

(74) Mandataire: **Grynwald, Albert et al**
**SCHMIT CHRETIEN**
**16, rue de la Paix**
**75002 Paris (FR)**

(56) Documents cités:
**WO-A-00/07376**           **US-A- 4 695 964**
**US-A- 5 144 687**           **US-B1- 6 219 446**

• **WATANABE M ET AL: "AN IMAGE DATA FILE FORMAT FOR DIGITAL STILL CAMERA" FINAL PROGRAM AND ADVANCE PRINTING OF PAPERS. ANNUAL CONFERENCE. IMAGING ON THE INFORMATION SUPERHIGHWAY, XX, XX, 1995, pages 421-424, XP000618775**

## Description

La présente invention concerne un procédé et un système pour calculer une image transformée à partir d'une image numérique et d'informations formatées relatives à une transformation géométrique.

### *Solution*

### Procédé

Par exemple, le document US 4,695,964 divulgue un procédé de correction d'images satellites portant une distorsion géométrique. La fonction de correspondance entre l'image brute et l'image corrigée est déterminée en fonction de l'orbite du satellite ou l'angle de parcours des images. La correction est calculée en appliquant l'inverse de la fonction de correspondance à tous les pixels de l'image. Ce procédé connu entraîne le problème que le calcul d'une position d'un point dans l'image est fortement consommateur de temps.

L'invention concerne un procédé pour calculer une image transformée à partir d'une image numérique et d'informations formatées relatives à une transformation géométrique, notamment des informations formatées relatives aux distorsions et/ou aberrations chromatiques d'une chaîne d'appareils. Le procédé comprend l'étape de calculer l'image transformée à partir d'une approximation de la transformation géométrique. Il en résulte que le calcul est économe en ressource mémoire, en bande passante mémoire, en puissance de calcul et donc en consommation électrique. Il en résulte également que l'image transformée ne présente pas de défaut visible ou gênant pour son utilisation ultérieure.

L'image numérique est composée de pixels ci-après dénommés pixels numériques. L'image transformée est composée de pixels ci-après dénommés pixels transformés. Le pixel transformé est caractérisé par une position transformée et une valeur transformée. De préférence, selon l'invention, le procédé comprend l'étape de calculer les valeurs des pixels transformés en mettant en oeuvre un algorithme général comprenant les processus suivants :

- processus (a), processus de sélection dans l'image numérique, à partir des informations formatées, pour chaque position transformée, d'un bloc de pixels numériques,
- processus (b), processus de calcul, à partir des informations formatées, pour chaque position transformée, d'une position numérique dans ledit bloc de pixels numériques,
- processus (c), processus de calcul pour ladite position transformée de la valeur de pixel transformée en fonction des valeurs des pixels numériques dudit bloc de pixels numériques et de ladite position numérique.

Les informations formatées comprennent des paramètres. Les paramètres permettent de choisir au moins une fonction mathématique liée à ladite transformation géométrique. La ou les fonctions mathématiques permettent de calculer le bloc de pixels numériques et la position numérique à partir de la position transformée.

De préférence, selon l'invention l'algorithme général est mis en oeuvre en procédant de la manière suivante :

- on sélectionne des pixels transformés, ci-après désignés les pixels transformés initiaux,
- on applique les processus (a), (b) et (c) de l'algorithme général pour les pixels transformés initiaux, pour obtenir des blocs de pixels numériques initiaux et des positions numériques initiales,

On applique à chaque pixel transformé autre que les pixels transformés initiaux un algorithme optimisé comprend les processus suivants :

- processus (d), processus de sélection d'un bloc de pixels numériques dans l'image numérique, à partir des blocs numériques initiaux et/ou à partir de chaque position transformée initiale,
- processus (e), processus de calcul d'une position numérique dans le bloc de pixels numériques, à partir des blocs numériques initiaux et/ou à partir de chaque position transformée initiale,
- processus (f), processus de calcul de la valeur de pixel transformée en fonction des valeurs des pixels numériques du bloc de pixels numériques et de la position numérique.

Il résulte de la combinaison des traits techniques qu'il est ainsi possible d'utiliser des informations formatées demandant des calculs complexes pour les points numériques initiaux et de réduire le temps de calcul global en appliquant un algorithme plus simple aux autres points, tout en conservant une bonne approximation de la transformation géométrique.

Le procédé est mis en oeuvre avec des moyens de traitement matériel et/ou logiciel. De préférence, selon l'invention, l'algorithme optimisé met en oeuvre exclusivement des données entières ou virgule fixe. Il résulte de la combinaison des traits techniques qu'il est possible d'exécuter l'algorithme général et l'algorithme optimisé sans processeur ou opérateur flottant, même si les processus (a) et (b) font des calculs flottant, puisque (a) et (b) sont exécutés bien moins souvent que (c) et (d) et qu'il est alors possible d'émuler le peu d'opérations flottantes utilisées, s'il en existe. Il résulte de la combinaison des traits techniques qu'il est ainsi possible d'embarquer les algorithmes par exemple dans un appareil photo en consommant le moins possible de courant et en allant le plus vite possible.

De préférence, selon l'invention le procédé comprend en outre l'étape de quantifier les positions numériques pour obtenir des positions numériques quantifiées. Il résulte de la combinaison des traits techniques que les étapes (c) et (f) peuvent être mises en oeuvre avec un nombre limité d'entrée ce qui permet de tabuler des coefficients et donc d'utiliser une mémoire cache beaucoup plus petite et d'avoir une bande passante mémoire principale plus faible.

De préférence, selon l'invention, le procédé comprend en outre l'étape de calculer des blocs de coefficients. Les processus (c) et (f) sont réalisés en :

- utilisant la position numérique quantifiée pour sélectionner un bloc de coefficients,
- calculant la valeur de pixel transformé à partir du bloc de coefficients et du bloc de pixels numériques.

Il résulte de la combinaison des traits techniques que le calcul des blocs de coefficients peut être réalisé avant la compilation.

Selon une variante de réalisation de l'invention, les processus de calcul (c) et (f) de la valeur de pixel transformé peuvent être également appliqués à une autre transformation que la transformation géométrique, notamment l'atténuation du flou de l'image. Il en résulte qu'il est ainsi possible de réaliser en consommant moins d'énergie et moins de temps, plusieurs transformations de l'image.

L'image numérique peut provenir d'un capteur ayant plusieurs canaux. Les canaux peuvent être combinés pour produire des plans couleur. De préférence dans ce cas, selon l'invention, les processus de calcul (c) et (f) de la valeur de pixel transformé permettent également de combiner les canaux afin d'obtenir les plans couleur. Il résulte de la combinaison des traits techniques que, dans le cas de 3 plans couleur RVB, le temps de calcul et la consommation électrique pour mettre en oeuvre l'algorithme général et/ou l'algorithme optimisé sont divisés jusqu'à trois. Il résulte également de la combinaison des traits techniques que la précision est meilleure. Il résulte également de la combinaison des traits techniques que, dans le cas d'un appareil qui intègre une fonction de combinaison des canaux, notamment un appareil photo numérique, il est possible à faible surcoût d'ajouter le traitement des transformations géométriques.

L'image numérique peut être composée de plans couleur. De préférence dans ce cas, selon l'invention, le procédé est tel que, pour corriger les aberrations chromatiques, on applique à chaque plan couleur une transformation géométrique différente.

De préférence, selon l'invention, le procédé comporte en outre l'étape de combiner la transformation géométrique avec une autre transformation géométrique variable selon l'image numérique, notamment un zoom. Il résulte de la combinaison des traits techniques qu'il est possible avec un faible surcoût en temps et énergie, d'appliquer à l'image numérique une autre transformation géométrique notamment un zoom, en même temps que la transformation géométrique. Il résulte également de la combinaison des traits techniques qu'il est possible d'appliquer la transformation géométrique sur une image numérique ayant subi une autre transformation géométrique.

Les informations formatées peuvent dépendre de caractéristiques variables selon l'image numérique, notamment la taille de l'image numérique. De préférence dans ce cas, selon l'invention, le procédé comprend en outre l'étape de déterminer la valeur des caractéristiques variables, pour l'image numérique. Les processus (a) et (b) utilisent les informations formatées dépendant de la valeur, ainsi déterminée, des caractéristiques variables. Il résulte de la combinaison des traits techniques que la mise en oeuvre du procédé pour des informations formatées dépendant d'une caractéristique variable est ramené à la mise en oeuvre du procédé pour des informations formatées ne dépendant d'aucune caractéristique variable.

De préférence, selon l'invention, les informations formatées sont liées à des défauts de distorsion et/ou aberrations chromatiques de la chaîne d'appareils. Les paramètres sont liés à un champ mesuré.

L'image transformée peut présenter une différence avec l'image obtenue par application de la transformation géométrique à l'image numérique. De préférence dans ce cas, selon l'invention, le procédé comprend en outre les étapes suivantes :

- l'étape de choisir un seuil,
- l'étape de choisir l'algorithme général et/ou l'algorithme optimisé et/ou les points transformés initiaux, de telle sorte que la différence soit inférieure au seuil.

Il résulte de la combinaison des traits techniques que le temps de calcul est minimal pour atteindre un certain niveau de qualité d'image.

L'image transformée peut présenter une différence avec l'image obtenue par application de la transformation géométrique à l'image numérique. De préférence dans ce cas, selon l'invention, le procédé comprend en outre les étapes suivantes :

- l'étape de choisir un seuil,
- l'étape de choisir l'algorithme général et/ou l'algorithme optimisé et/ou les points transformés initiaux et/ou la quantification des positions numériques quantifiées, de telle sorte que la différence soit inférieure au seuil.

Il résulte de la combinaison des traits techniques que le temps de calcul est minimal pour atteindre un certain niveau de qualité d'image.

De préférence, selon l'invention, le procédé comprend en outre l'étape de trier les positions transformées de telle sorte que les blocs de pixels numériques sélectionnés par les processus (a) et/ou (d) aient un nombre moyen de pixels numériques communs déterminé. Il résulte de la combinaison des traits techniques qu'une mémoire cache de petite taille ou un nombre faibles de registres suffit pour contenir une grande partie des valeurs de pixels nécessaires à des itérations successives des processus (a) et/ou (d). Il résulte également de la combinaison des traits techniques que la bande passante mémoire est fortement réduite. Il résulte également de la combinaison des traits techniques qu'il n'est pas nécessaire de conserver l'image numérique complète dans une mémoire. Il résulte également de la combinaison des traits techniques qu'il n'est pas nécessaire de conserver l'image transformée complète dans une mémoire. Il résulte également de la combinaison des traits techniques que le coût et la consommation électriques sont réduits.

**Système**

L'invention concerne un système pour calculer une image transformée à partir d'une image numérique et d'informations formatées relatives à une transformation géométrique, notamment des informations formatées relatives aux distorsion et/ou aberrations chromatiques d'une chaîne d'appareils. Le système comprend des moyens de calcul pour calculer l'image transformée à partir d'une approximation de la transformation géométrique.

L'image numérique est composée de pixels ci-après désignés pixels numériques. L'image transformée est composée de pixels ci-après désignés pixels transformés. Le pixel transformé est caractérisé par une position transformée et une valeur transformée. De préférence, selon l'invention, le système comprend des moyens de calcul pour calculer les valeurs des pixels transformés en mettant en oeuvre des moyens de traitement informatique comportant un algorithme général comprenant les processus suivants :

- processus (a), processus de sélection dans l'image numérique, à partir des informations formatées, pour chaque position transformée, d'un bloc de pixels numériques,
- processus (b), processus de calcul, à partir des informations formatées, pour chaque position transformée, d'une position numérique dans le bloc de pixels numériques,
- processus (c), processus de calcul pour la position transformée de la valeur de pixel transformée en fonction des valeurs des pixels numériques du bloc de pixels numériques et de la position numérique.

Les informations formatées comprennent des paramètres. Les paramètres permettent de choisir au moins une fonction mathématique liée à la transformation géométrique. La ou les fonctions mathématiques permettent de calculer le bloc de pixels numériques et la position numérique à partir de la position transformée.

De préférence, selon l'invention, les moyens de calcul mettent en oeuvre l'algorithme général de la manière suivante :

- en sélectionnant des pixels transformés, ci-après désignés les pixels transformés initiaux,
- en appliquant les processus (a), (b) et (c) de l'algorithme général pour les pixels transformés initiaux, pour obtenir des blocs de pixels numériques initiaux et des positions numériques initiales.

Les moyens de calcul appliquent à chaque pixel transformé autre que les pixels transformés initiaux un algorithme optimisé comprenant les processus suivants :

- processus (d), processus de sélection d'un bloc de pixels numériques dans l'image numérique, à partir des blocs numériques initiaux et/ou à partir de chaque position transformée initiale,
- processus (e), processus de calcul d'une position numérique dans le bloc de pixels numériques, à partir des blocs numériques initiaux et/ou à partir de chaque position transformée initiale,
- processus (f), processus de calcul de la valeur de pixel transformée en fonction des valeurs des pixels numériques du bloc de pixels numériques et de la position numérique.

L'algorithme général ou l'algorithme optimisé est exécuté par des moyens de traitement matériel et/ou logiciel.

Selon une variante de réalisation avantageuse, l'algorithme optimisé met en oeuvre exclusivement des données entières ou virgule fixe.

De préférence, selon l'invention, le système comprend en outre des moyens de traitement informatique pour quantifier les positions numériques de manière à obtenir des positions numériques quantifiées.

De préférence, selon l'invention le système comprend en outre des moyens de calcul pour calculer des blocs de coefficients. Les processus (c) et (f) sont exécutés par les moyens de calcul en :

- utilisant la position numérique quantifiée pour sélectionner un bloc de coefficients,
- calculant la valeur de pixel transformé à partir du bloc de coefficients et du bloc de pixels numériques.

Les processus de calcul (c) et (f) de la valeur de pixel transformé sont également applicables à d'autres transformations que la transformation géométrique, notamment l'atténuation du flou de l'image.

L'image numérique provenant d'un capteur peut avoir plusieurs canaux. Les canaux peuvent être combinés pour produire des plans couleur. De préférence, selon l'invention, les processus de calcul (c) et (f) de la valeur de pixel transformé sont tels qu'ils permettent également de combiner les canaux afin d'obtenir les plans couleur.

De préférence, selon l'invention, l'image numérique est composée de plans couleur. Le système est tel que, pour corriger les aberrations chromatiques, les moyens de traitement informatique permettent d'appliquer à chaque plan couleur une transformation géométrique différente.

De préférence, selon l'invention, le système est tel que les moyens de traitement informatique permettent de combiner la transformation géométrique avec une autre transformation géométrique variable selon l'image numérique, notamment un zoom.

Les informations formatées peuvent dépendre de caractéristiques variables selon l'image numérique, notamment la taille de l'image numérique. De préférence dans ce cas, selon l'invention le système comprend en outre des moyens de traitement informatique pour déterminer la valeur des caractéristiques variables, pour l'image numérique concernée. Les moyens de calcul exécutant les processus (a) et (b) utilisent les informations formatées dépendant de la valeur, ainsi déterminée, des caractéristiques variables.

De préférence, selon l'invention, les informations formatées sont liées à des défauts de distorsion et/ou aberrations chromatiques de la chaîne d'appareils. Les paramètres sont liés à un champ mesuré.

L'image transformée peut présenter une différence avec l'image obtenue par application de la transformation géométrique à l'image numérique. De préférence dans ce cas, selon l'invention, le système comprend en outre des moyens de traitement informatique permettant de mettre en oeuvre un algorithme général et/ou un algorithme optimisé et/ou des points transformés initiaux de telle sorte que la différence soit inférieure à un seuil choisi.

L'image transformée peut présenter une différence avec l'image obtenue par application de la transformation géométrique à l'image numérique. De préférence dans ce cas, selon l'invention, le système comprend en outre des moyens de traitement informatique permettant de mettre en oeuvre un algorithme général et/ou un algorithme optimisé et/ou des points transformés initiaux et/ou la quantification des positions numériques quantifiées de telle sorte que la différence soit inférieure à un seuil choisi.

De préférence, selon l'invention, le système comprend en outre des moyens de traitement informatique pour trier les positions transformées de telle sorte que les blocs de pixels numériques sélectionnés par les processus (a) et/ou (d) aient un nombre moyen de pixels numériques communs déterminé.

**Description détaillée**

D'autres caractéristiques et avantages de l'invention apparaîtront à la lecture de la description des variantes de réalisation de l'invention données à titre d'exemple indicatif et non limitatif, et de :

- la figure 1, une illustration d'un exemple de réalisation simplifié de l'invention ;
- la figure 2a à 2d, un exemple de réalisation perfectionné d'un procédé de calcul d'une image transformée selon l'invention ;
- la figure 3, un organigramme de fonctionnement du procédé de la figure 2a ;
- la figure 4, une illustration d'une étape de calcul de la valeur d'un pixel transformé ;
- la figure 5a, un organigramme d'une variante d'un procédé calcul d'une image transformée selon l'invention ;
- les figures 5b et 5c, des illustrations explicatives du procédé de la figure 5a ;
- la figure 6, une illustration de l'étape de calcul d'une valeur d'un pixel transformé permettant de mettre en oeuvre plusieurs types de corrections ;
- la figure 7, une illustration de l'invention appliquée à une image couleur ;
- la figure 8, un perfectionnement de l'invention permettant de calculer des pixels voisins,
- les figures 9a et 9b, l'application de l'invention à des images couleur de type VRVB,

- figure 10 : des informations formatées IF liées aux défauts P5 de distorsion géométrique d'un appareil P25 d'une chaîne d'appareils P3,
- figure 11, un exemple de système selon l'invention.

**Appareil**

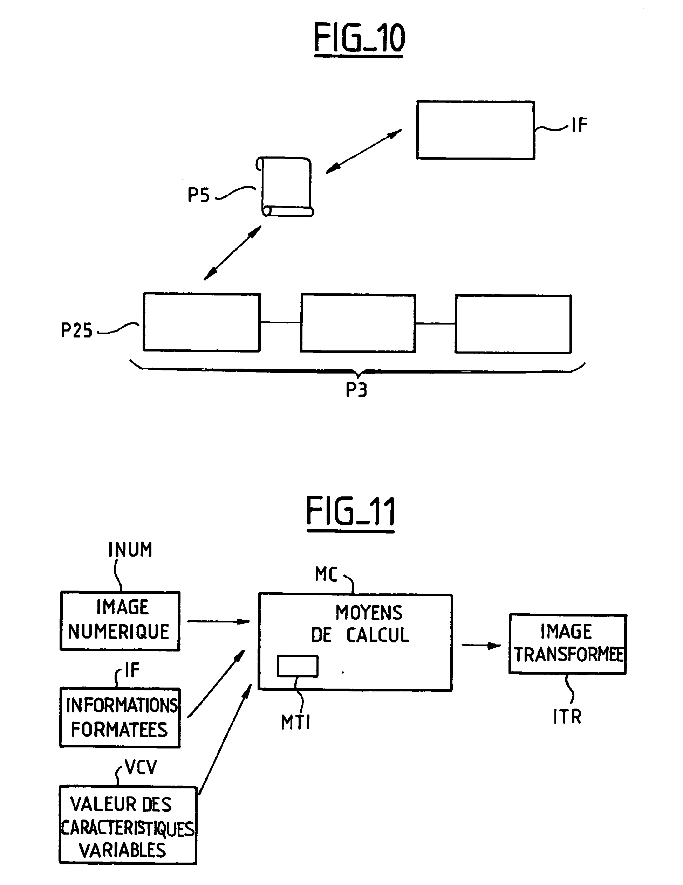

En se référant notamment à la figure 10, on va décrire la notion d'appareil P25. Au sens de l'invention, un appareil P25 peut être notamment:

- un appareil de capture d'image ou un appareil de capture d'image, comme par exemple un appareil photo jetable, un appareil photo numérique, un appareil reflex, un scanner, un fax, un endoscope, un caméscope, une caméra de surveillance, une caméra intégrée ou reliée à un téléphone, à un assistant personnel ou à un ordinateur, une caméra thermique, un appareil d'échographie,
- un appareil de restitution d'image, comme par exemple un écran, un projecteur, un téléviseur, des lunettes de réalité virtuelle ou une imprimante,
- un être humain ayant des défauts de vision, par exemple l'astigmatisme,
- un appareil auquel on veut ressembler, pour produire des images ayant par exemple un aspect similaire à celles produites par un appareil de marque Leica,
- un dispositif de traitement d'images, par exemple un logiciel de zoom qui a comme effet de bord d'ajouter du flou,
- un appareil virtuel équivalent à plusieurs appareil P25,

Un appareil P25 plus complexe comme un scanner/fax/imprimante, un Minilab d'impression photo, un appareil de vidéo-conférence peut être considéré comme un appareil P25 ou plusieurs appareils P25.

**Chaîne d'appareils**

En se référant notamment à la figure 10, on va maintenant décrire la notion de chaîne d'appareils P3. On appelle chaîne d'appareils P3 un ensemble d'appareils P25. La notion de chaîne d'appareils P3 peut en outre inclure une notion d'ordre.

Les exemples suivants constituent des chaînes d'appareils P3:

- un seul appareil P25,
- un appareil de capture d'image et un appareil de restitution d'image,
- un appareil photo, un scanner, une imprimante par exemple dans un Minilab de tirage photo,
- un appareil photo numérique, une imprimante par exemple dans un Minilab de tirage photo,
- un scanner, un écran ou une imprimante, par exemple dans un ordinateur,
- un écran ou projecteur et l'oeil d'un être humain,
- un appareil et un autre appareil auquel on veut ressembler,
- un appareil photo et un scanner,
- un appareil de capture d'image, un logiciel de traitement d'images,
- un logiciel de traitement d'images, un appareil de restitution d'image,
- une combinaison des exemples précédents,
- un autre ensemble d'appareils P25.

**Défaut**

En se référant notamment à la figure 10, on va maintenant décrire la notion de défaut P5. On appelle défaut P5 de l'appareil P25, un défaut lié aux caractéristiques de l'optique et/ou du capteur et/ou de l'électronique et/ou du logiciel intégré à un appareil P25 ; des exemples de défauts P5 sont par exemple la distorsion géométrique, le flou, le vignetage, les aberrations chromatiques, le rendu des couleurs, l'uniformité du flash, le bruit du capteur, le grain, l'astigmatisme, l'aberration sphérique.

**Image numérique**

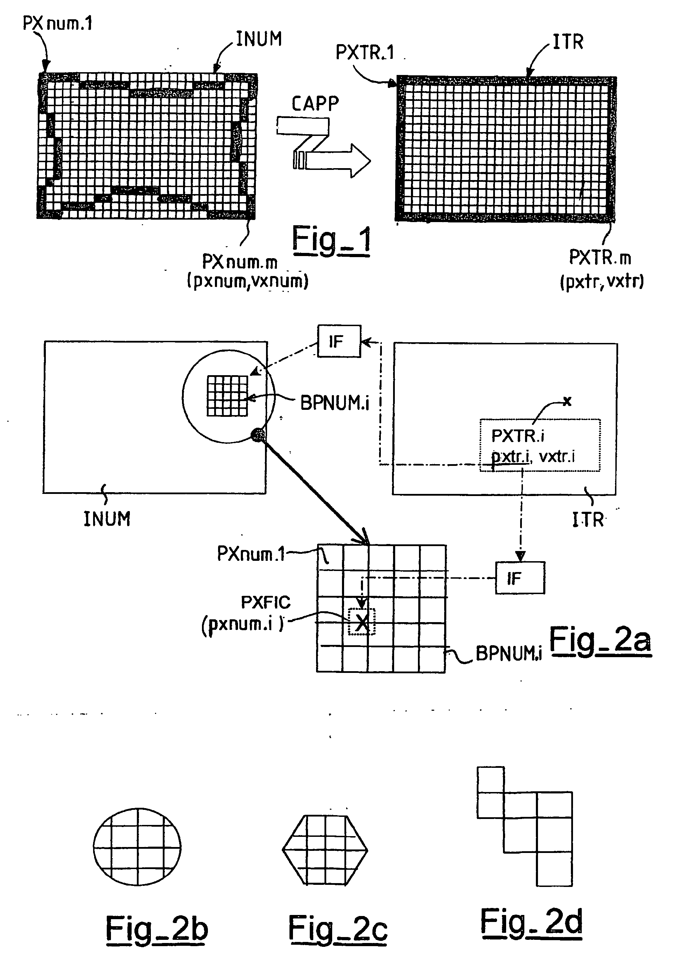

En se référant notamment à la figure 1, on va maintenant décrire la notion d'image numérique INUM. On appelle image numérique INUM une image capturée ou modifiée ou restituée par un appareil P25. L'image numérique INUM peut provenir d'un appareil P25 de la chaîne d'appareils P3. L'image numérique INUM peut être destinée à un appareil P25 de la chaîne d'appareils P3. Dans le cas d'images animées, par exemple vidéo, constituées d'une séquence dans le temps d'images fixes, on appelle image numérique INUM : une image fixe de la séquence d'images.

**Informations formatées**

En se référant notamment à la figure 10, on va maintenant décrire la notion d'informations formatées IF. On appelle informations formatées IF des données liées à une transformation géométrique, par exemple des données liées aux défauts P5 d'un ou plusieurs appareils P25 de la chaîne d'appareils P3 et permettant de calculer une image transformée ITR en tenant compte des défauts P5 de l'appareil P25. Les défauts P5 peuvent être notamment des défauts de distorsion géométrique et/ou aberration chromatiques. Pour produire les informations formatées IF, on peut utiliser divers procédés basés sur des mesures, et/ou des captures ou restitution de références, et/ou des simulations.

Pour produire les informations formatées IF, on peut par exemple utiliser le procédé décrit dans la demande de brevet international déposée le même jour que la présente demande au nom de la société Vision IQ et sous le titre : "Procédé et système pour produire des informations formatées liées aux distorsions géométriques." Dans cette demande, il est décrit un procédé pour produire des informations formatées IF liées aux appareils P25 d'une chaîne d'appareils P3. La chaîne d'appareils P3 comprend notamment au moins un appareil de capture d'image et/ou au moins un appareil de restitution d'image. Le procédé comprend l'étape de produire des informations formatées IF liées aux distorsions géométriques d'au moins un appareil de la chaîne.

L'appareil P25 permettant de capturer ou restituer une image sur un support. L'appareil P25 comporte au moins une caractéristique fixe et/ou une caractéristique variable selon l'image. La caractéristique fixe et/ou caractéristique variable est susceptible d'être associée à une ou plusieurs valeurs de caractéristiques, notamment la focale et/ou la mise au point et leurs valeurs de caractéristiques associées. Le procédé comprend l'étape de produire des informations formatées mesurées liées aux distorsions géométriques de l'appareil à partir d'un champ mesuré. Les informations formatées IF peuvent comprendre les informations formatées mesurées.

Pour produire les informations formatées IF, on peut par exemple utiliser le procédé décrit dans la demande de brevet international déposée le même jour que la présente demande au nom de la société Vision IQ et sous le titre : "Procédé et système pour réduire la fréquence des mises à jour de moyens de traitement d'images." Dans cette demande, il est décrit un procédé pour réduire la fréquence des mises à jour de moyens de traitement d'images, notamment un logiciel et/ou un composant. Les moyens de traitement d'images permettant de modifier la qualité des images numériques provenant ou destinées à une chaîne d'appareils. La chaîne d'appareil comporte au moins un appareil de capture d'image et/ou au moins un appareil de restitution d'image. Les moyens de traitement d'image mettent en oeuvre des informations formatées liées aux défauts d'au moins un appareil P25 de la chaîne d'appareils P3. Les informations formatées IF dépendent d'au moins une variable. Les informations formatées permettant d'établir une correspondance entre une partie des variables et des identifiants. Les identifiants permettent de déterminer la valeur de la variable correspondante à l'identifiant en tenant compte de l'identifiant et de l'image. Il résulte de la combinaison des traits techniques qu'il est possible de déterminer la valeur d'une variable, notamment dans le cas où la signification physique et/ou le contenu de la variable ne sont connus que postérieurement à la diffusion des moyens de traitement d'image. Il résulte également de la combinaison des traits techniques que le temps entre deux mises à jour du logiciel de correction peut être espacé. Il résulte également de la combinaison des traits techniques que les divers acteurs économiques qui produisent des appareils et/ou des moyens de traitement d'image peuvent mettre à jour leurs produits indépendamment des autres acteurs économiques, même si ces derniers changent radicalement les caractéristiques de leurs produit ou ne peuvent forcer leur client à mettre à jour leur produits. Il résulte également de la combinaison des traits techniques qu'une nouvelle fonctionnalité peut être déployée progressivement en commençant par un nombre limité d'acteurs économiques et d'utilisateurs pionniers.

Pour produire les informations formatées IF, on peut par exemple utiliser le procédé décrit dans la demande de brevet international déposée le même jour que la présente au nom de la société Vision IQ et sous le titre : "Procédé et système pour fournir des informations formatées à des moyens de traitement d'images.", n° de publication WO 03/007239 A1. Dans cette demande, il est décrit un procédé pour fournir, selon un format standard, des informations formatées IF à des moyens de traitement d'images, notamment des logiciels et/ou des composants. Les informations formatées IF sont liées aux défauts d'une chaîne d'appareils P3. La chaîne d'appareils P3 comprend notamment au moins un appareil de capture d'image et/ou un appareil de restitution d'image. Les moyens de traitement d'images utilisent les informations formatées IF pour modifier la qualité d'au moins une image provenant ou destinée à la chaîne d'appareils P3. Les informations formatées IF comportent des données caractérisant des défauts P5 de l'appareil de capture d'image, notamment les caractéristiques de distorsion, et/ou des données caractérisant des défauts de l'appareil de restitution des images, notamment les caractéristiques de distorsion.

Le procédé comprend l'étape de renseigner au moins un champ du format standard avec les informations formatées IF. Le champ est désigné par un nom de champ. Le champ contenant au moins une valeur de champ.

Pour rechercher et préparer les informations formatées IF, on peut par exemple utiliser le procédé décrit dans la demande de brevet international déposée le même jour que la présente demande au nom de la société Vision IQ et sous le titre : "Procédé et système pour modifier la qualité d'au moins une image provenant ou destinée à une chaîne d'appareils." Dans cette demande, il est décrit un procédé pour modifier la qualité d'au moins une image provenant ou destinée à une chaîne d'appareils déterminée. La chaîne d'appareils déterminée comprend au moins un appareil de capture d'image et/ou au moins un appareil de restitution d'image. Les appareils de capture d'image et/ou les appareils de restitution d'image, progressivement mis sur le marché par des acteurs économiques distincts, appartiennent à un ensemble indéterminé d'appareils. Les appareils P25 de l'ensemble d'appareils présentent des défauts P5 qui peuvent être caractérisés par des informations formatées. Le procédé comprend, pour l'image concernée, les étapes suivantes :

- l'étape de répertorier des sources d'informations formatées relatives aux appareils de l'ensemble d'appareils,
- l'étape de rechercher de manière automatique, parmi les informations formatées ainsi répertoriées, des informations formatées spécifiques relatives à la chaîne d'appareils déterminée,
- l'étape de modifier de manière automatique l'image numérique INUM au moyen de logiciels de traitement d'images et/ou de composants de traitement d'images en tenant compte des informations formatées spécifiques ainsi obtenues.

## Caractéristique variable

On va maintenant décrire la notion de caractéristique variable. Selon l'invention, on appelle caractéristique variable un facteur mesurable et variable d'une image numérique INUM à l'autre capturée, modifiée ou restituée par un même appareil P25, et ayant une influence sur le défaut P5 de l'image capturée, modifiée ou restituée par l'appareil P25, notamment :

- une variable globale, fixe pour une image numérique INUM donnée, par exemple une caractéristique de l'appareil P25 au moment de la capture ou de restitution de l'image liée à un réglage de l'utilisateur ou liée à un automatisme de l'appareil P25,
- une variable locale, variable dans une image numérique INUM donnée, par exemple des coordonnées x, y ou ro, theta dans l'image, permettant d'appliquer le cas échéant un traitement local différent selon la zone de l'image numérique INUM.

N'est en général pas considéré comme une caractéristique variable : un facteur mesurable et variable d'un appareil P25 à l'autre mais fixe d'une image numérique INUM à l'autre capturée, modifiée ou restituée par un même appareil P25, par exemple la focale pour un appareil P25 à focale fixe.
Les informations formatées IF peuvent dépendre d'au moins une caractéristique variable.
Par caractéristique variable, on peut entendre notamment:

- la focale de l'optique,
- le redimensionnement appliqué à l'image (facteur de zoom numérique : grossissement d'une partie de l'image ; et/ou le sous-échantillonnage : diminution du nombre de pixels de l'image),
- la correction non linéaire de luminance, par exemple la correction de gamma,
- le rehaussement de contour, par exemple le niveau de déflouage appliqué par l'appareil P25,
- le bruit du capteur et de l'électronique,
- l'ouverture de l'optique,
- la distance de mise au point,
- le numéro de la vue sur un film,
- la sur ou sous exposition,
- la sensibilité du film ou du capteur,
- le type de papier utilisé dans une imprimante,
- la position du centre du capteur dans l'image,
- la rotation de l'image par rapport au capteur,
- la position d'un projecteur par rapport à l'écran,
- la balance des blancs utilisée,
- l'activation du flash et/ou sa puissance,
- le temps de pose,
- le gain du capteur,
- la compression,
- le contraste,
- un autre réglage appliqué par l'utilisateur de l'appareil P25, par exemple un mode de fonctionnement,
- un autre réglage automatique de l'appareil P25,

- une autre mesure réalisée par l'appareil P25.

**Valeur de caractéristique variable**

On va maintenant décrire la notion de valeur de caractéristique variable VCV. On appelle valeur de caractéristique variable VCV la valeur de la caractéristique variable au moment de la capture, modification ou restitution d'une image numérique INUM déterminée.

**Modèle paramétrable**

Au sens de l'invention, on appelle modèle paramétrable un modèle mathématique pouvant dépendre des caractéristiques variables et relatif à un ou plusieurs défauts P5 de un ou plusieurs appareils P25. Les informations formatées IF relatives à un défaut P5 d'un appareil P25 peuvent se présenter sous la forme des paramètres d'un modèle paramétrable dépendant des caractéristiques variables.

**Calcul de l'image transformée**

En se reportant à la figure 1, on va décrire un exemple général de réalisation du procédé et système de l'invention.
Une image numérique INUM comporte un ensemble d'éléments images appelés pixels PXnum.1 à PXnum.n régulièrement réparties à la surface de l'image INUM. Sur la figure 1, ces pixels ont la forme de carrés mais ils pourraient avoir une toute autre forme, circulaire par exemple ; cela dépend de la conception des surfaces destinées à porter l'image dans les appareils de capture et de restitution d'image. De plus, sur la figure 1, les pixels ont été représentés de façon jointive mais en réalité, généralement il existe un espacement entre les pixels.
L'image transformée ITR comporte également un ensemble de pixels appelés pixels transformés PXTR.1 à PXTR.n chaque pixel transformé est caractérisé par une position transformée pxtr et une valeur transformée vxtr.
Une image transformée est une image corrigée ou modifiée qui est obtenue par application d'une transformation à une image. Cette transformation qui peut être une transformation géométrique est réalisée en intégrant dans le calcul des informations formatées qui tiennent compte, par exemple, des défauts des appareils utilisés ou de caractéristiques que l'on veut introduire dans l'image.
On notera que les informations formatées peuvent être relatives à un nombre limité de pixels transformés et/ou intégrer des valeurs de caractéristique variable VCV selon l'image (par exemple la focale, la mise au point, l'ouverture ...), dans ce cas il peut y avoir une étape supplémentaire réalisée par exemple par interpolation de manière à se ramener à des informations formatées simples telles celles d'un appareil ne présentant aucune caractéristiques variables, de sorte que le cas des appareils à focale variable se ramène au cas d'un appareil à focale fixe.
Dans l'exemple d'une fonction x',y' = f(x, y, t) où t est une caractéristique variable, les informations formatées peuvent être constituées d'un nombre limité de valeurs (xi, yi, ti, f(xi, yi, ti)) , il faut alors calculer une approximation pour les autres valeurs de x, y, t. Selon le même formalisme t pourrait être un vecteur et inclure simultanément plusieurs caractéristiques variables. Dans le cas de la distorsion, les informations formatées pourraient être constituées éventuellement de vecteurs permettant d'indiquer le déplacement que suit chaque point, ou d'un ensemble d'éléments discrets représentant les points de mesures utilisés durant une étape préalable d'étalonnage, ou encore toutes fonctions correspondant à une approximation sur cet ensemble discrets de manière à réduire la taille des informations formatées.
Les informations formatées pourront comprendre des données relatives aux appareils utilisés et étudiées dans une phase préalable, mais également toutes informations du style format Exif ou autre qui renseigneraient sur les réglages de l'appareil au moment de la prise de vue (focale, mise au point, ouverture, vitesse, flash...).
L'image numérique INUM représente par exemple la capture de l'image d'un rectangle. Sur la figure 1, les pixels correspondant au tracé du rectangle ont été noircis. Du fait des distorsions des appareils de capture le rectangle a été déformé comme sur l'image INUM représentée en figure 1. L'invention permet, à l'aide d'un calcul CAPP incorporant des approximations selon entre autre une précision finale souhaitée, d'obtenir les valeurs vxtr de pixels transformés de position pxtr et d'obtenir sur l'image transformée ITR, un rectangle dont la position et la valeur des pixels sont bien corrigées aux approximations près.
Notons que l'application de l'algorithme CAPP peut dans le cas d'une distorsion ramener l'image déformée vers une image parfaite ou quasi parfaite. Le même algorithme peut également ramener l'image déformée vers une autre image éventuellement déformée différemment de manière à produire une image à la ressemblance proche d'un type d'image connu (effet fish-eye, distorsion retro ...). Le même algorithme permet également de ramener l'image déformée vers une image non parfaite (au sens d'un carré droit comme sur la figure 1) mais optimale aux yeux de l'observateur de sorte de qu'il est possible de compenser éventuellement des défauts géométrique de perception de l'oeil humain.
La figure 2a représente un exemple du procédé et système perfectionné selon l'invention. Sur l'image numérique et sur l'image transformée on n'a représenté que les pixels utiles à la description de ce procédé et système. Sur l'image transformée on a représenté un pixel PXTR.i dont on veut connaître la valeur. A la position d'un pixel transformé pxtr.i dans l'image transformée correspond, dans l'image numérique, une position pxnum.i qui est obtenue à partir d'informations formatées (IF) incluant par exemple dans le cas de la distorsion, le vecteur de déplacement nécessaire à ajouter à pxnum.i pour retomber sur pxtr.i.

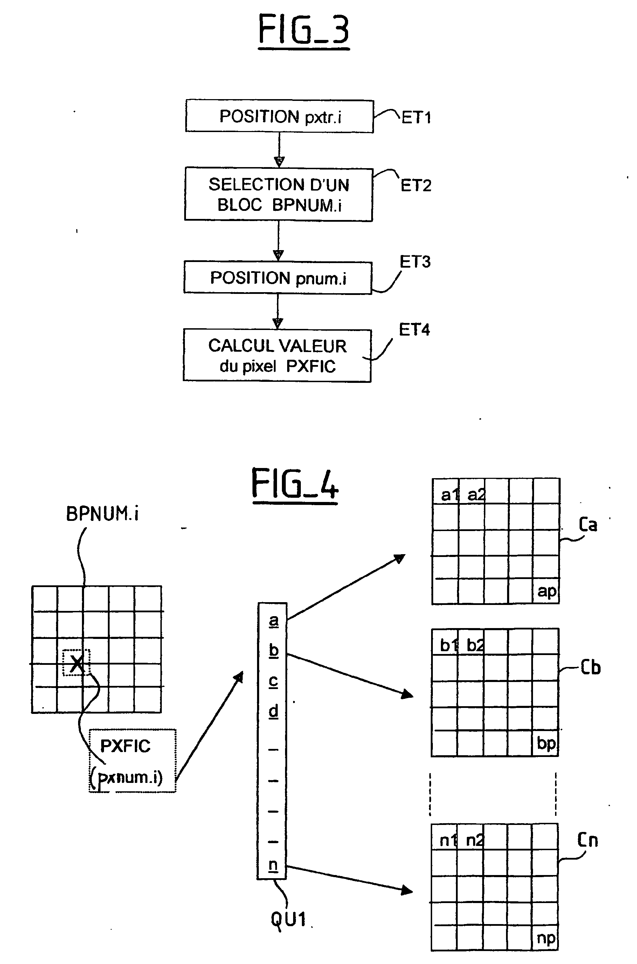

L'invention comporte différentes étapes ainsi décrites et représentées en figure 3.

Tout d'abord, on identifie la position pxtr.i d'un pixel transformé PXTR.i dans l'image transformée (étape ET1). Au cours d'une étape suivante (ET2) connaissant la position dans l'image ITR on en déduit, à l'aide d'informations formatées IF qui traduisent les caractéristiques des appareils de capture et/ou de restitution d'images, la position d'un bloc de pixels BPNUM.i de l'image numérique INUM, lequel bloc englobe la position pxnum.i d'un point correspondant au pixel transformé PXTR.i. Selon l'exemple de la figure 2a, un bloc de pixels comporte 5 x 5 pixels.

Ensuite, (étape ET3) on calcule, à l'aide des informations formatées, pour la position transformée pxtr.i du pixel PXTR.i, la position numérique pxnum.i du point du bloc de pixels numériques correspondant au pixel PXTR.i. Comme on peut le voir sur la figure 2a, ce point ne correspond pas forcément à la position du centre d'un pixel du bloc de pixels BPNUM.i. On comprend donc que la valeur transformée du pixel PXTR.i ne correspond pas à la valeur d'un pixel numérique.

Au cours de l'étape suivante (ET4), connaissant la position d'un point pxnum.i dans le bloc BPNUM.i, on calcule la valeur d'un pixel fictif dans le bloc BPNUM. i et dont le point pxnum.i est le centre. Ce pixel fictif PXFIC a une valeur qui doit prendre en compte la valeur des pixels qui entourent le point pxnum.i dans le bloc et donc qui prend également en compte la position de ce point dans le bloc. Selon une méthode simple on peut faire une moyenne des valeurs des pixels qui entourent le point.

On peut également faire une moyenne de la valeur des pixels du bloc en affectant à la valeur de chaque pixel un coefficient qui est fonction de la distance de ce pixel par rapport à la position pxnum.i du point. Ce qui revient à faire la somme suivante pour l'ensemble du bloc de pixels.

$$\Sigma\text{vxnum.j x Cj (position pxnum.i numérique)}$$

avec vxnum.j = valeur d'un pixel dans le bloc.

Cj = coefficient du pixel en fonction de la position pxnum.i du point.

Le coefficient de chaque pixel d'un bloc, en fonction de la position pxnum.i du point, peut être calculé de différentes façons. Une première façon est d'utiliser une expression analytique pour le calcul des coefficients de chaque pixel du bloc, en fonction par exemple de l'ordre de la surface d'approximation, de la précision du calculateur et de la position pxnum.i dans le bloc.

Une façon plus simple est de limiter le nombre de positions possibles d'un point dans le bloc par une technique de quantification de la position pxnum.i. Dans ce cas là, on prévoit de fabriquer une table de coefficients pour chaque position possible d'un point dans le bloc. Pour les différentes valeurs quantifiées de positions dans un bloc, on calculera plusieurs séries de coefficients avec dans chaque série une valeur de coefficient par pixel du bloc.

Par la suite lors de l'étape ET4 précédemment décrite, on quantifiera la position pxnum.i du point dans le bloc ce qui permettra d'accéder à une série de coefficients avec un coefficient par pixel du bloc utile. Il suffira de multiplier cette série de coefficients par la série de valeurs des mêmes pixels.

La figure 4 schématise un tel processus. La position pxnum.i d'un point est quantifiée en une valeur décrite pouvant prendre un nombre limité de valeurs de a à n.

Pour chaque valeur décrite de position d'un point, on dispose d'une table de coefficients Ca à Cn. Pour une valeur, « a » par exemple, la table QU1 permet d'accéder à une table de coefficients a1 à an. La valeur « a », par exemple, permet d'accéder à la table Ca. La table Ca comporte autant de coefficients a1 à an que le bloc de pixel BPNUM.i comporte de pixels. Ces coefficients ont chacun été calculés en fonction de la position pxnum.i du point dans le bloc de façon à donner un poids à la valeur de chaque pixel. On comprendra aisément que les pixels les plus éloignés du point de position pxnum.i dans le bloc auront un poids faible, tandis que les pixels les plus proches auront un poids plus fort.

A l'aide de la table de coefficients Ca et de l'ensemble des valeurs des pixels du bloc BPNUM.i on réalise l'opération

$$\Sigma(\text{vxnum.j x Cj})$$

de façon à obtenir la valeur d'un pixel fictif PXFIC et c'est cette valeur qui va être affectée au pixel transformé pxtr.i de l'image transformée ITR.

Dans un exemple de réalisation, on pourra considérer que la position d'un point pxnum.i obtenue, à l'aide d'informations formatées, à partir de la position d'un pixel transformé pourra s'exprimer par une partie entière (ou un premier nombre d'adressage) et une partie décimale (ou un deuxième nombre d'adressage). La quantification de l'adresse pxnum.i qui a été décrite précédemment pourra porter par exemple uniquement sur la partie décimale.

La partie entière pourra être l'adresse d'un bloc de pixel BPNUM.i dans l'image INUM ou plus précisément l'adresse d'un pixel défini de ce bloc, par exemple le pixel PXnum.1 du bloc.

La partie décimale désignera l'adresse du point dans le bloc. Pour cette adresse on pourra quantifier le nombre de possibilités et décider qu'elle ne peut s'exprimer que sur un nombre limité de bits ce qui limitera le nombre de tables de coefficients Ca à Cn. Par exemple avec une adresse dans le bloc exprimée sur 3 bits on aura à prévoir 8 tables de coefficients Ca à Cn.

Il est ainsi possible d'exécuter le procédé de l'invention sans processeur ou opérateur flottant, même si les étapes ET2 et ET3 font des calculs flottants, puisque ces étapes seront susceptibles d'être exécutées bien moins souvent que l'étape ET4 et qu'il est alors possible d'émuler le peu d'opérations flottantes utilisées, s'il en existe de sorte qu'il est ainsi possible d'embarquer lesdits algorithmes par exemple dans un appareil photo en consommant le moins possible de courant et en allant le plus vite possible. Dans ce cas, le système selon l'invention comprend des moyens de traitement matériel et/ou logiciel sans processeur ou opérateur flottant.

Cependant, il est possible d'utiliser des processeurs ou opérateurs dits flottants (exemple : processeur Intel Pentium) par opposition à des processeurs ou opérateurs dits entiers (exemple : processeur de traitement du signal Texas Instruments TMS320C54xx).

Le procédé qui précède peut être appliqué à tous les pixels de l'image transformée pour connaître leur valeur à partir des valeurs des pixels numériques.

Pour cet exemple de procédé on a pris, à titre d'exemple, un bloc de pixels numériques de forme carrée. Cependant comme représenté en figures 2b, 2c et 2d, ce bloc pourrait avoir toute autre forme (circulaire, hexagonale, etc.).

On va maintenant décrire un perfectionnement du procédé et système de l'invention permettant de réaliser un traitement plus rapide. On constate que, pour chaque pixel transformé, le calcul d'une position d'un point dans l'image numérique à l'aide des informations formatées prend du temps qui peut être économisé.

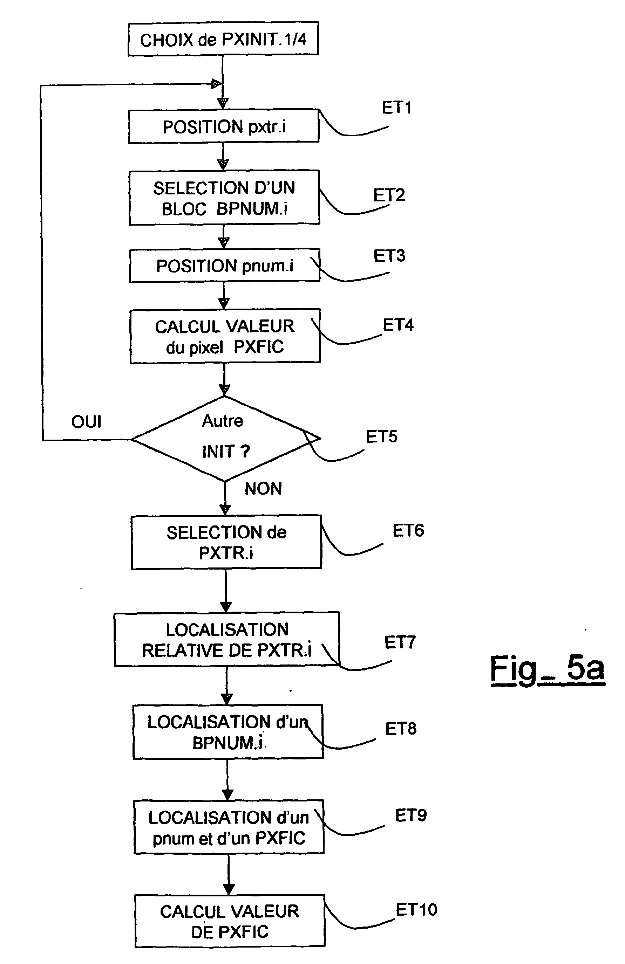

La figure 5a représente un organigramme d'un exemple de variante d'un procédé de calcul d'une image transformée.

On choisit tout d'abord (étape ET0), dans l'image transformée, un certain nombre de pixels qu'on appellera pixels transformés initiaux. Par exemple, on choisit quatre pixels PXINIT.1 à 4.

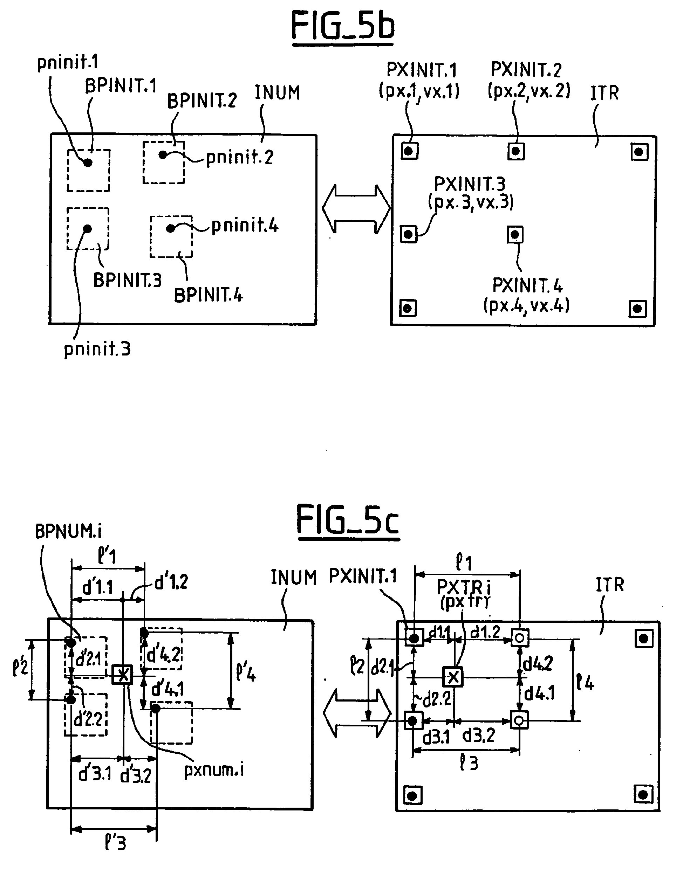

Pour chaque pixel transformé on réalise le procédé précédemment décrit. C'est pourquoi, sur la figure 5a on retrouve les étapes ET1 à ET4 qui sont les mêmes que celles de la figure 3. Lorsque les étapes ET1 à ET4 ont été appliquées à un pixel transformé initial PXINIT.1 à 4, le système s'interroge (étape ET5) pour savoir si tous les pixels transformés initiaux ont été traités ; si ce n'est pas le cas le processus des étapes ET1 à ET4 recommence pour un autre pixel transformé initial. Lorsque tous les pixels transformés initiaux ont été traités, le système est près à passer à l'étape suivante ET6 du procédé. On se trouve, à l'issue de l'étape ET5, dans la situation représentée en figure 5b, avec :

- dans l'image transformée ITR, quatre pixels transformés PXINIT.1 à 4 ;
- dans l'image numérique INUM, quatre blocs de pixels numériques initiaux BPINIT.1 à 4 dans lesquels se trouvent des points pninit.1 à 4. Les positions des blocs BPINIT.1 à 4 dans l'image INUM sont connues (voir étape ET2 du procédé). Les positions des points pninit.1 à 4 dans leurs blocs respectifs sont également connues (voir étape ET3 du procédé).

Il s'agit maintenant de calculer la valeur d'un pixel transformé PXTR.i quelconque de l'image transformée. Sur la figure 5c, ce pixel PXTR.i est situé entre les pixels transformés initiaux, mais cela n'est pas obligatoire.

Au cours de l'étape ET6 on sélectionne donc un pixel PXTR.i et on acquiert sa position pxtr dans l'image transformée.

Au cours de l'étape ET7 on calcul la position relative du pixel PXTR.i par rapport aux pixels transformés initiaux PXINIT.1 à 4. Par exemple, connaissant les positions (px.1, px.2, etc.)de tous ces pixels, on calcule les distances 11 à 14 entre pixels transformés initiaux ainsi que les distances d1.1, d1. 2, d2.1, ... d4.2 du pixel PXTR.i aux pixels transformés initiaux PXINIT.1 à 4. Ensuite, on exprime la position du pixel PXTR.i en position relative par rapport aux pixels transformés initiaux et/ou par rapport aux distances séparant les pixels transformés initiaux. Cette position relative pourra ainsi être exprimée en pourcentages de distances. Cette position pourra également être exprimée sous la forme d'une relation bilinéaire du type :

$$(d1.1)(d2.1)(px.4) + (1-d1.1)(d2.1)(px.3) +$$
$$(d1.1)(1-d2.1)(px.2) + (1-d1.1)(1-d2.1)(px.1)$$

ou toute autre relation d'ordre supérieur.

Au cours de l'étape ET8, on localise le bloc de pixel numérique BPNUM.i contenant le point résultant de la projection mathématique du pixel transformé PXTR.i sur l'image numérique à partir des relations de proportionnalité précédemment calculée.

Au cours de l'étape ET9, avec les mêmes règles de proportionnalité, on détermine la position pxnum.i, dans le bloc BPNUM.i, du point résultant de la projection mathématique du pixel transformé PXTR.i sur l'image numérique.

A ce stade l'utilisation des règles de proportionnalité appliquée à l'ensemble de points de l'image est économe en temps de calcul par rapport à l'utilisation des informations formatées.

Comme précédemment la position du point pxnum.i pourra être quantifiée et être exprimée sur un nombre limité de bits. On pourra prendre la même base de quantification que celle adoptée lors du calcul des valeurs des pixels transformés initiaux de façon à utiliser les mêmes tables de coefficients à appliquer au bloc de pixels numériques pour obtenir la valeur du pixel PXFIC et donc celle du pixel transformé PXTR.i (étape ET10).

On notera que:

- les pixels transformés initiaux peuvent être disposés selon une matrice régulière, que le pas de la matrice peut être une puissance de deux pour pouvoir bénéficier des instructions parallèles d'un processeur, notamment les instructions MMX, SSE, SSE2 de Intel ou 3DNow de AMD.
- la localisation d'un bloc de pixels (étape ET8) et la localisation d'un point dans le bloc de pixels localisé (étape ET9) peuvent être faites par interpolation bilinéaire.

Selon une variante de réalisation de l'invention on peut prévoir de réaliser le procédé du calcul de la valeur du pixel en plusieurs étapes afin de réduire la taille des blocs et le nombre final d'addition et/ou multiplication réalisé par le calculateur. Pour certaines valeurs des coefficients Cj représentant un opérateur d'interpolation dit mathématiquement séparable pour un homme de l'art, il est possible d'effectuer l'algorithme général et/ou optimisé pour une transformation géométrique horizontale dans un premier temps et à nouveau pour une transformation géométrique verticale sur le résultat intermédiaire, de sorte que le nombre de multiplications et/ou additions nécessaire pour traiter un bloc est théoriquement divisé par deux.

On notera également que :

- la quantification des positions des pixels transformés et des pixels numériques permet de réaliser des tables de coefficients de dimension constantes et limitées, ce qui permet d'utiliser une mémoire cache beaucoup plus petite et d'avoir une bande passante mémoire principale plus faible. Ceci est possible parce que les calculs des étapes ET3 et ET10 ne dépendent que de la position numérique dans le bloc de pixel.
- les tables de coefficients peuvent être réalisées une fois pour toute dans le système. Bien entendu, il est possible d'avoir plusieurs types de tables de coefficients de tailles différentes correspondant à des blocs de pixels numériques de tailles différentes. Ainsi, il sera possible en modifiant la précision de la quantification de modifier le taux de l'approximation du traitement et donc de modifier la qualité de l'image transformée obtenue. Il est également possible d'avoir plusieurs types de tables de coefficients de mêmes tailles mais dans lesquelles, pour une même position d'un point dans un bloc de pixels numériques, les différents types de tables contiennent des coefficients de valeurs différentes afin le cas échéant de compenser au choix différents types de défauts distincts (distorsion, vignetage, flou ...).
- Une dimension intéressante des tables de coefficients peut être de 4 x 4 sans que cela soit obligatoire.
- Les coefficients peuvent être ceux d'une interpolation bi-cubique et les calculs des étapes ET3 et ET10 peuvent être faits sous forme d'un produit scalaire.

L'approximation du traitement résultant de la quantification sur un nombre limité de bits des positions des pixels, comme cela vient d'être décrit, conduit à avoir une image transformée qui peut présenter une différence par rapport à une image obtenue entièrement par transformation mathématique. Dans ces conditions on peut décider de limiter cette approximation en prévoyant, dans le procédé, une étape de choix de seuil. Cette étape portera notamment sur le choix d'un seuil de quantification en décidant que la quantification ne descendra pas en dessous d'un seuil déterminé de façon à avoir un nombre de positions numériques d'un point dans un bloc de pixels qui ne soit pas inférieur à ce seuil. On pourra ainsi optimiser le temps de calcul pour une qualité d'image transformée déterminée.

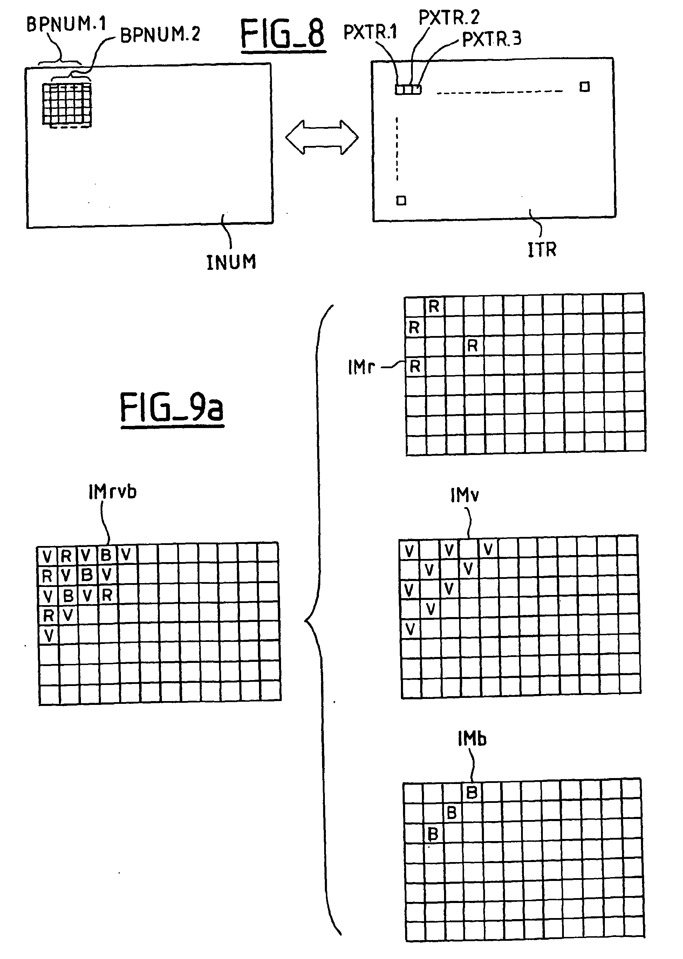

La figure 8 représente un perfectionnement de l'invention permettant d'économiser du temps d'échange mémoire et donc du temps de traitement. On conçoit aisément que le calcul de la valeur de deux pixels transformés voisins conduise à utiliser deux blocs de pixels numériques ayant des pixels communs et donc à aller lire deux fois (selon cet exemple) les valeurs de ces pixels communs. Le perfectionnement de l'invention a pour objet d'éviter cette double lecture. Pour cela on prévoit de trier les positions des pixels transformés de façon à les traiter selon un certain ordre. Par exemple, on peut décider de traiter les pixels transformés de l'image transformée, ligne par ligne et dans chaque ligne, pixel par pixel en décrivant chaque ligne de la gauche vers la droite. C'est ainsi que sur la figure 8, on peut traiter tout d'abord le pixel PXTR.1, puis le pixel PXTR.2, etc.

Le traitement du pixel PXTR.1, selon le procédé décrit précédemment, donne lieu :

- à la sélection d'un bloc de pixels numériques BPNUM1,
- au positionnement d'un point dans ce bloc de pixels,
- au calcul de la valeur du pixel transformé PXTR.1 en fonction de la position de ce point et de la valeur des pixels du bloc.

Selon le perfectionnement du procédé et système de l'invention, les valeurs des pixels BPNUM.1 sont gardées dans une mémoire temporaire. De façon pratique, la mémorisation des valeurs de ces pixels pourra se faire, par exemple, en mémoire cache.

Le traitement du pixel PXTR.2 donne lieu à la sélection du bloc de pixels numériques BPNUM.2, par exemple, qui possède des pixels en commun avec le bloc BPNUM.1 précédemment utilisé. Les valeurs de ces pixels ayant été gardées en mémoire temporaire, le système n'a besoin d'aller chercher que les valeurs des pixels de BPNUM.2 non communs avec le bloc BPNUM.1 ; sur la figure 8, il s'agit des pixels de la colonne de droite du bloc BPNUM.2. Après le traitement du pixel PXTR2, on conserve en mémoire temporaire les valeurs des pixels du bloc BPNUM.2 de façon à préparer le traitement du pixel transformé suivant PXTR.3.

Selon une variante de l'invention, on peut ne garder en mémoire temporaire que les valeurs des pixels communs aux deux blocs de pixels utilisés successivement. De façon générale, on ne mémorisera en mémoire temporaire que les valeurs d'un nombre moyen de pixels communs à deux blocs de pixels utilisés successivement.

La description qui précède a été faite dans le cadre de la correction de distorsion mais l'invention est également applicable à la correction ou l'atténuation du flou de sorte qu'il est possible de réaliser plusieurs transformations d'image en consommant moins d'énergie et moins de temps.

Cette même description est également applicable pour le cas d'une chaîne d'appareils où un ou plusieurs appareils présenteraient des défauts par exemple de distorsion. Une combinaison des informations formatées se traduiraient dans l'espace de la distorsion par une simple sommation vectorielle et permettrait de traiter la globalité du défaut sur la chaîne d'appareils en une seule passe.

Il est également possible de combiner dans une même transformation, plusieurs types de corrections telles le remplissage des valeurs discrètes RGB et/ou CMJN sur un capteur d'image couleur, la suppression du vignettage de l'image, l'adjonction d'une fonction d'agrandissement ou de zoom, un changement de perspective.

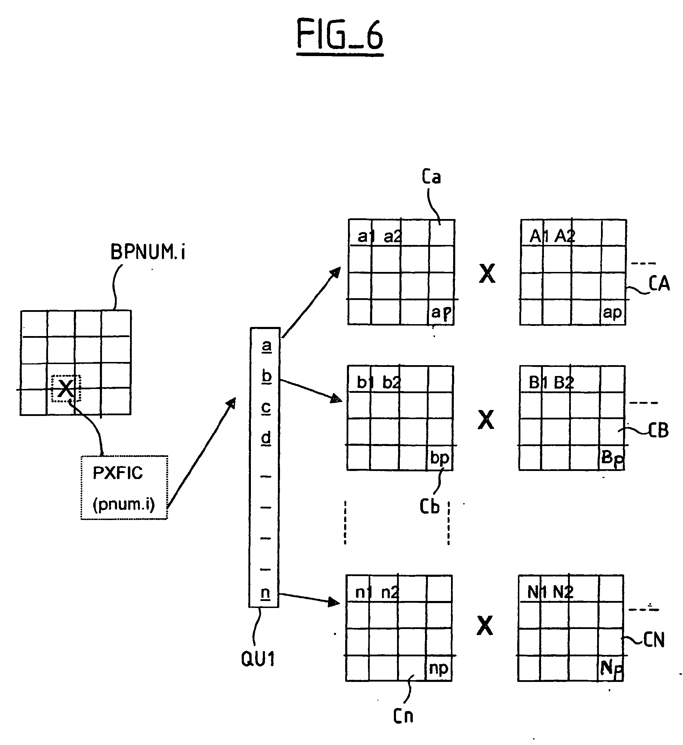

La figure 6, schématise les étapes de calcul (ET4 ou ET10) dans lequel on peut prévoir, pour calculer la valeur de chaque pixel transformé, des tables de coefficients supplémentaires permettant d'effectuer d'autres corrections. C'est ainsi, que sur la figure 6, les tables de coefficients Ca à Cn permettent de calculer les valeurs corrigées des pixels après correction des distorsions. Les tables de coefficients CA et CN permettent de corriger d'autres défauts tels que le flou, le vignettage de l'image, etc. La multiplication des tables entre elles, tel que cela est indiqué sur la figure 6, ou toute autre opération permettant de combiner les coefficients d'une table, permet de combiner plusieurs corrections de types différents et donc d'économiser du temps de traitement et de la consommation d'énergie. Une telle disposition permet à discrétion d'effectuer telle ou telle correction, ou l'ensemble des corrections si l'utilisateur le souhaite.

On va maintenant décrire l'application des exemples de réalisation des procédés et système précédemment décrits au traitement d'une image de couleur.

On peut considérer qu'une image couleur provient de plusieurs canaux et fournit plusieurs plans image ou plans couleur.

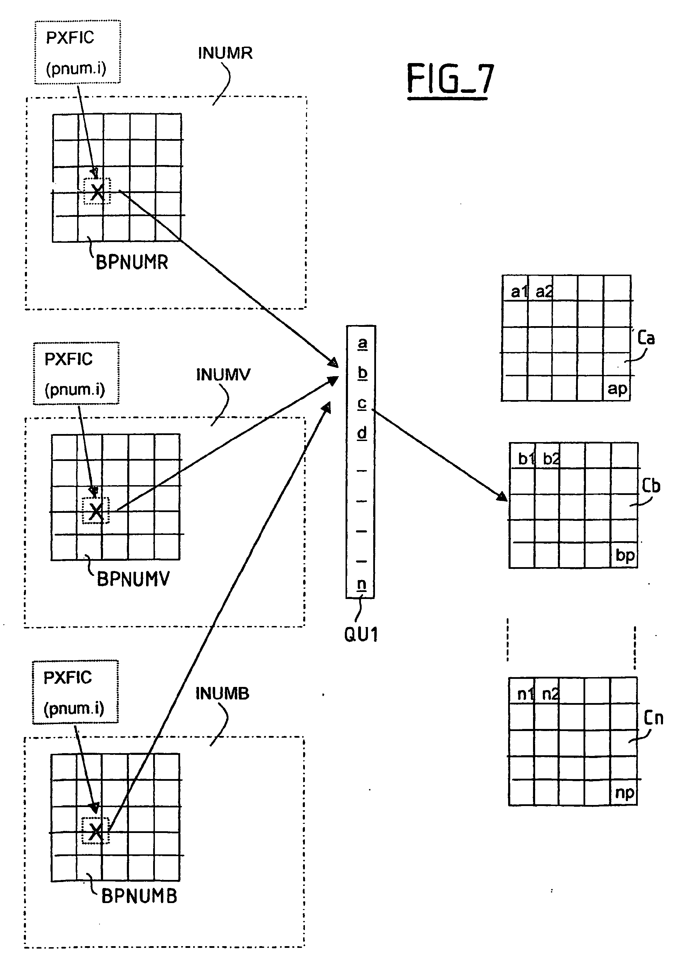

Comme représenté en figure 7, une image couleur est considérée comme étant constituée par une image rouge INUMR, une image verte INUMV et une image bleue INUMB.

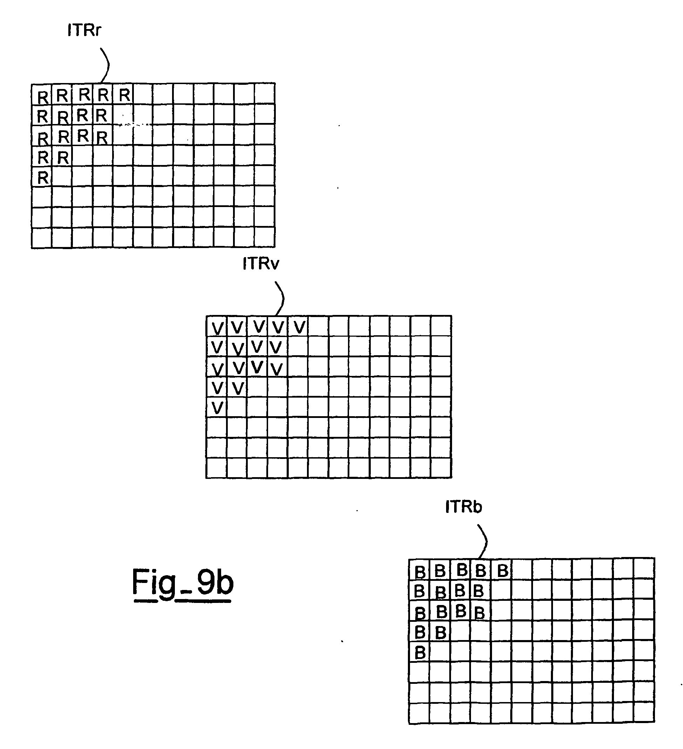

Les procédés décrits précédemment sont exécutés jusqu'à l'étape de calcul de la valeur d'un pixel transformé, c'est à dire jusqu'à l'étape ET3 de la figure 3 ou ET9 de la figure 5a. On connaît donc alors la position d'un bloc de pixels numériques (BPNUMR, BPNUMV, BPNUMB), dans chaque image INUMR, INUMV et INUMB, ainsi que la position dans ces blocs, d'un point correspondant au pixel transformé dont on veut calculer la valeur. On connaît également la valeur des différents pixels constituant les blocs BPNUMB, BPNUMV et BPNUMB.

La position du point correspondant au pixel transformé à calculer, permet d'accéder à une table de coefficients, par exemple la table Cl sur la figure 7. Comme précédemment, on effectue le calcul

$$\Sigma(\text{vxnum.i x Cj})$$

en réalisant la somme des produits de la valeur d'un pixel du bloc par le coefficient correspondant de la table de coefficients. On effectue cette opération pour le bloc BPNUMR de l'image rouge, puis pour le bloc BPNUMV de l'image verte et enfin pour le bloc BPNUMB de l'image bleu. On obtient ainsi la valeur d'un pixel transformé dans ses composantes rouge, verte et bleue.

Un tel procédé et système permet, pour la couleur, d'économiser du temps et de la consommation d'énergie. Un tel traitement peut ainsi être intégré dans un appareil photo numérique. Il peut être alors envisagé d'ajouter au traitement des transformations géométriques.

L'invention est applicable au traitement des images couleur dans lesquelles les nombres de pixels des différentes couleurs ou nombres de canaux couleur (r, v, b)ne sont égaux. Par exemple une image trichrome IMrvb, telle que représentée en figure 9a, peut comporter deux pixels verts pour un pixel rouge et un pixel bleu ce qui est généralement le cas des capteurs couleur où l'oeil est beaucoup sensible aux longueurs d'onde du vert. Par ailleurs une image couleur est considérée du point de vue du traitement logiciel de l'image comme comportant autant d'images (ou plans couleurs) qu'il y de couleurs de base dans l'image. C'est ainsi que l'image IMrvb de la figure 9a est considérée comme comportant les trois plans couleur IMr, IMv, IMb. Dans le procédé et système précédemment décrit, chaque plan couleur sera traité indépendamment de façon à obtenir trois images transformées. De plus, il peut être intéressant de donner une valeur à chaque pixel de chacune de ces images transformées. La figure 9b représente trois plans images transformés ITRr, ITRv et ITRb correspondant aux trois plans images couleur IMr, IMv et IMb de la figure 9a. Le calcul de la valeur de chaque pixel des différents plans images transformés se fait en appliquant le procédé décrit précédemment et en prenant pour chaque pixel couleur transformé (rouge par exemple) un bloc de pixel numérique du plan image numérique couleur correspondant ( le plan IMr selon l'exemple pris).

De plus, dans l'application du procédé et système à une image couleur, pour économiser du temps et de l'énergie électrique, on pourra combiner les traitements des trois plans couleur.

Notamment, on pourra prévoir d'appliquer une même transformation géométrique entre un plan image couleur transformé et un plan image couleur numérique pour compenser par exemple la distorsion.

On pourra également appliquer pour les différents plans couleur des transformations géométriques différentes de façon à corriger les aberrations chromatiques et/ou la distorsion.

On notera que dans une image RVB (à trois canaux), les plans couleur transformés peuvent être obtenus en prenant un pixel sur trois.

Dans la description qui précède l'image transformée et l'image numérique se correspondent par transformation géométrique. Il est possible de combiner une première transformation géométrique déterminée résultant notamment des caractéristiques fixes et connues des appareils utilisés avec une deuxième transformation géométrique telle qu'une transformation géométrique variable qui est fonction de l'image numérique et notamment, par exemple, des conditions de capture de l'image (zoom par exemple), de sorte qu'il est possible avec un faible surcoût en temps et énergie, d'appliquer à l'image numérique l'autre transformation géométrique, le zoom selon l'exemple pris, en même temps que la première transformation géométrique et qu'il est possible d'appliquer la transformation géométrique variable sur une image numérique ayant subi la première transformation géométrique.

La deuxième transformation géométrique peut être notamment :

- une rotation,
- une rotation de un quart ou un demi-tour,
- une translation,
- un zoom,
- un redimensionnement,
- un changement de perspective,
- un changement de repère,
- une projection,
- une transformation géométrique représentée par une fonction permettant de calculer des coordonnées x' et y' à partir de coordonnées x et y,
- l'identité,
- une combinaison de ces exemples,
- toute transformation géométrique linéaire ou non.

La combinaison entre les deux transformations géométriques peut être faite dans divers buts :

- appliquer à l'image numérique la deuxième transformation géométrique notamment un zoom, en même temps que la première transformation géométrique pour, par exemple dans le cas où la transformation géométrique est liée à une distorsion, pouvoir obtenir une image transformée de même taille que l'image numérique, malgré le redimensionnement nécessaire pour avoir des bords d'image droit;
- combiner les distorsions de plusieurs appareils d'une chaîne pour les corriger en une étape ;
- dans le cas par exemple d'un appareil photo numérique produisant des images de diverses tailles en appliquant un zoom, et où la transformation géométrique est liée aux distorsions géométriques de l'appareil, la combinaison de la transformation géométrique avec le zoom permet de corriger les distorsions; des informations relatant l'historique des traitements appliqués à l'image numérique peuvent être utiles à cette fin.

La combinaison entre les deux transformations géométriques peut être faite de diverses façons :

- par calcul sur les paramètres,
- par calcul sur les fonctions mathématiques, par exemple s'il s'agit de champ de vecteurs par addition de vecteurs, s'il s'agit de polynômes par combinaison des polynômes ; les fonctions mathématiques peuvent être des fonctions calculant des coordonnées x' et y' à partir de coordonnées x et y,
- par calcul à chaque itération des processus des étapes ET2 et ET3, dans ce cas la mise en oeuvre de l'algorithme optimisé permet de rendre très faible le surcoût en temps de calcul de l'application de la deuxième transformation géométrique aux points transformés initiaux lorsqu'on applique le procédé de la figure 5a.

L'invention est applicable dans tout système de traitement d'image mais également dans les appareils photographiques, les caméscope, les caméras de surveillance, les caméras informatiques de type webcam..

Les exemples de réalisation de l'invention ainsi décrits pourront être mis en oeuvre sous forme logicielle ou sous forme de composants câblés.

La figure 11 représente un exemple de système selon l'invention. Le système comprend des moyens de calcul MC. Les moyens de calcul MC mettent en oeuvre le procédé selon l'invention, pour calculer l'image transformée ITR à partir à partir de 1' image numérique INUM, de la valeur des caractéristiques variables VCV et d'informations formatées IF relatives à une transformation géométrique, notamment d'informations formatées IF relatives aux distorsions et/ou aberrations chromatiques de la chaîne d'appareils P3.

Le système peut comprendre des moyens de traitement informatique MTI, pour notamment mettre en oeuvre le procédé selon l'invention pour:

- quantifier les positions numériques de manière à obtenir des positions numériques quantifiées, et/ou
- corriger les aberrations chromatiques en appliquant à chaque plan couleur une transformation géométrique différente, pour combiner la transformation géométrique avec une autre transformation géométrique variable selon l'image numérique, notamment un zoom,
- déterminer la valeur des caractéristiques variables VCV, pour l'image numérique concernée, par exemple en utilisant les données enregistrées au format Exif dans le fichier contenant l'image numérique INUM,
- trier les positions transformées.

Application de l'invention à la réduction de coût

On appelle réduction de coût, un procédé et système pour diminuer le coût d'un appareil P25 ou d'une chaîne d'appareils P3, notamment le coût de l'optique d'un appareil ou d'une chaîne d'appareils; le procédé consistant à :

- diminuer le nombre de lentilles, et/ou
- simplifier la forme des lentilles, et/ou
- concevoir ou choisir dans un catalogue une optique ayant des défauts P5 plus importants que ceux souhaités pour l'appareil ou la chaîne d'appareils, et/ou
- utiliser des matériaux, composants, traitements ou procédés de fabrication moins coûteux pour l'appareil ou la chaîne d'appareils, ajoutant des défauts P5.

Le procédé et système selon l'invention peut être utilisé pour diminuer le coût d'un appareil ou d'une chaîne d'appareils : on peut concevoir une optique numérique, produire des informations formatées IF relatives aux défauts P5 de l'appareil ou à la chaîne d'appareils, utiliser ces informations formatées pour permettre à des moyens de traitement d'image, intégrés ou non, de modifier la qualité des images provenant ou destinées à l'appareil ou à la chaîne d'appareils, de sorte que la combinaison de l'appareil ou la chaîne d'appareil et des moyens de traitement d'image permettent de capturer, modifier ou restituer des images de la qualité souhaitée avec un coût réduit.

**Revendications**

1. Procédé pour calculer une image transformée composée de pixels ci-après désignés pixels transformés (PXTR.1 à PXTR.m) à partir d'une image numérique (INUM) composée de pixels ci-après désignés pixels numériques (PXnum.1 à PXnum.m) et d'informations formatées (IF) relatives à une transformation géométrique, notamment des informations formatées (IF) relatives aux distorsion et/ou aberrations chromatiques (P5) d'une chaîne d'appareils (P3) ;

   ledit pixel transformé étant **caractérisé par** une position transformée (pxtr) et une valeur transformée (vxtr),

   ledit procédé comprenant l'étape de calculer ladite image transformée (ITR) à partir d'une approximation (CAPP) de ladite transformation géométrique, le procédé comprenant à cet effet l'étape de calculer les valeurs (vxtr) desdits pixels transformés (PXTR.1 à PXTR.m) en mettant en oeuvre un algorithme général de la manière suivante :

   - on sélectionne des pixels transformés, ci-après désignés pixels transformés initiaux (PXINIT.1 à PXINIT.4),
   - on applique les processus suivants pour lesdits pixels transformés initiaux pour obtenir des blocs de pixels numériques initiaux (BPINIT.1 à BPINIT.4) et des positions numériques initiales (pninit.1 à pninit.4) :

      processus (a), processus de sélection (ET1, ET2) dans ladite image numérique, à partir desdites informations formatées, pour chaque position transformée initiale (px), d'un bloc de pixels numériques initial (BPINIT.i),

      processus (b), processus de calcul (ET3), à partir desdites informations formatées (IF), pour chaque position transformée initiale (px), d'une position numérique initiale (pninit.i) dans ledit bloc de pixels numériques (BPINIT.i),

      processus (c), processus de calcul (ET4) pour ladite position transformée initiale (px) de ladite valeur de pixel transformée initale en fonction des valeurs des pixels numériques (pninit.1) dudit bloc de pixels numériques (BPINIT.i) et de ladite position numérique (pninit.i);

   - on applique à chaque pixel transformé (PXTR.i) autre que les pixels transformés initiaux (PXINIT.1 à PXINIT. 4) un algorithme optimisé comprenant les processus suivants :

      processus (d), processus de sélection d'un bloc de pixels numériques (BPNUM.i) dans ladite image numérique, à partir desdits blocs numériques initiaux (BPINIT.1 à BPINIT.4), et

      processus (e), processus de calcul d'une position numérique (pnum.i) dans ledit bloc de pixels numériques (BPNUM.i), à partir desdits blocs numériques initiaux et/ou à partir de chaque position transformée initiales (px.1 à px.4),

      processus (f), processus de calcul de ladite valeur de pixel transformée (PXTR.i) en fonction des valeurs des pixels numériques dudit bloc de pixels numériques (BPNUM.i) et de ladite position numérique (pnum.i); lesdites informations formatées comprenant des paramètres ; lesdits paramètres permettant de choisir au moins une fonction mathématique liée à ladite transformation géométrique ; la ou lesdites fonctions mathématiques permettant de calculer ledit bloc de pixels numériques et ladite position numérique à partir de ladite position transformée.

2. Procédé selon la revendication 1 ; ledit procédé étant mis en oeuvre avec des moyens de traitement matériel et/ou logiciel ; ledit algorithme optimisé mettant en oeuvre exclusivement des données entières ou virgule fixe.

3. Procédé selon l'une quelconque des revendications 1 et 2 ; ledit procédé comprenant en outre l'étape de quantifier lesdites positions numériques (QU1) pour obtenir des positions numériques quantifiées.

4. Procédé selon la revendication 3; ledit procédé comprenant en outre l'étape de calculer des blocs de coefficients (Ca à Cn et CA à CN); lesdits processus (c) et (f) étant réalisés en :

   - utilisant ladite position numérique quantifiée (QU1) pour sélectionner un bloc de coefficients (Ca à Cn et/ou CA à CN),
   - calculant ladite valeur de pixel transformé à partir dudit bloc de coefficients et dudit bloc de pixels numériques.

5. Procédé selon l'une quelconque des revendications 1 à 4 ; les processus de calcul (c) et (f) de la valeur de pixel transformé étant également applicables à une autre transformation que ladite transformation géométrique, notamment l'atténuation du flou de ladite image.

**6.** Procédé selon l'une quelconque des revendications 1 à 5 ; ladite image numérique provenant d'un capteur ayant plusieurs canaux ; lesdits canaux pouvant être combinés pour produire des plans couleur (IMr à IMb) ; les processus de calcul (c) et (f) de la valeur de pixel transformé permettant également de combiner lesdits canaux afin d'obtenir lesdits plans couleur.

**7.** Procédé selon l'une quelconque des revendications 1 à 6 ; ladite image numérique étant composée de plans couleur ; ledit procédé étant tel que, pour corriger les aberrations chromatiques, on applique à chaque plan couleur une transformation géométrique différente.

**8.** Procédé selon l'une quelconque des revendications 1 à 7 ; ledit procédé comportant en outre l'étape de combiner ladite transformation géométrique avec une autre transformation géométrique variable selon ladite image numérique, notamment un zoom.

**9.** Procédé selon l'une quelconque des revendications 1 à 8 ; lesdites informations formatées dépendant de caractéristiques variables selon l'image numérique, notamment la taille de ladite image numérique; ledit procédé comprenant en outre l'étape de déterminer la valeur desdites caractéristiques variables, pour ladite image numérique; lesdits processus (a) et (b) utilisant lesdites informations formatées dépendant de la valeur, ainsi déterminée, desdites caractéristiques variables ;
de sorte que la mise en oeuvre du procédé pour des informations formatées dépendant d'une caractéristique variable est ramené à la mise en oeuvre du procédé pour des informations formatées ne dépendant d'aucune caractéristique variable.

**10.** Procédé selon l'une quelconque des revendications 1 à 9 ; lesdites informations formatées étant liées à des défauts de distorsion et/ou aberrations chromatiques de ladite chaîne d'appareils ; lesdits paramètres étant liés à un champ mesuré.

**11.** Procédé selon l'une quelconque des revendications 1 à 10 ; ladite image transformée présentant une différence avec l'image obtenue par application de ladite transformation géométrique à ladite image numérique; ledit procédé comprenant en outre les étapes suivantes :

- l'étape de choisir un seuil,
- l'étape de choisir l'algorithme général et/ou l'algorithme optimisé et/ou les points transformés initiaux, de telle sorte que ladite différence soit inférieure audit seuil.

**12.** Procédé selon l'une quelconque des revendications 3 à 11; ladite image transformée présentant une différence avec l'image obtenue par application de ladite transformation géométrique à ladite image numérique; ledit procédé comprenant en outre les étapes suivante :

- l'étape de choisir un seuil,
- l'étape de choisir l'algorithme général et/ou l'algorithme optimisé et/ou les points transformés initiaux et/ou la quantification des positions numériques quantifiées, de telle sorte que ladite différence soit inférieure audit seuil.

**13.** Procédé selon l'une quelconque des revendications 1 à 12 ; ledit procédé comprenant en outre l'étape de trier lesdites positions transformées de telle sorte que lesdits blocs de pixels numériques sélectionnés par lesdits processus (a) et/ou (d) aient un nombre moyen de pixels numériques communs déterminé.

**14.** Système pour calculer une image transformée (ITR) composée de pixels ci-après désignés pixels transformés (PXTR.1 à PXTR.m) à partir d'une image numérique (INUM) composée de pixels ci-après désignés pixels numériques (PXnum.1 à PXnum.m) et d'informations formatées (IF) relatives à une transformation géométrique, notamment des informations formatées relatives aux distorsion et/ou aberrations chromatiques (P5) d'une chaîne d'appareils (P3),
ledit pixel transformé étant **caractérisé par** une position transformée (pxtr) et une valeur transformée (vxtr),
ledit système comprenant des moyens de calcul (MC) pour calculer ladite image transformée (ITR) à partir d'une approximation (CAPP) de ladite transformation géométrique, ces moyens de calcul étant utilisés pour calculer les valeurs (vxtr) desdits pixels transformés en mettant en oeuvre

- des moyens pour sélectionner des pixels transformés, ci-après désignés pixels transformés initiaux (PIINIT. 1 à PINIT.4),

- des moyens de traitement informatique comportant un algorithme général comprenant les processus suivants pour lesdits pixels transformés initiaux (BPINIT.1 à BPINIT.4) pour obtenir des blocs de pixels numériques initiaux (BPINIT.1 à BPINIT.4) et des positions numériques initiales (pninit.1 à pninit.4) :

processus (a), processus de sélection dans ladite image numérique, à partir desdites informations formatées, pour chaque position transformée initiale (px), d'un bloc de pixels numériques initial (BPINIT.i),

processus (b), processus de calcul, à partir desdites informations formatées, pour chaque position transformée initiale (px), d'une position numérique initiale (pninit.i) dans ledit bloc de pixels numériques initial (BPINIT.i),

processus (c), processus de calcul pour ladite position transformée de ladite valeur de pixel transformée initiale en fonction des valeurs des pixels numériques initiales dudit bloc de pixels numériques initial et de ladite position numérique initiale (pninit.i);

- des moyens de traitement informatique pour appliquer à chaque pixel transformé (PXTR.i) autre que les pixels transformés initiaux (PXINIT.1 à PXINIT.4) un algorithme optimisé comprenant les processus suivants

processus (d), processus de sélection d'un bloc de pixels numériques (BPNUM.i) dans ladite image numérique, à partir desdits blocs numériques initiaux (BPINIT.1 à BPINIT.4) et/ou à partir de chaque position transformée initiale (px.1 à px.4)"

processus (e), processus de calcul d'une position numérique (pnum.i) dans ledit bloc de pixels numériques (BPNUM.i), à partir desdits blocs numériques initiaux et/ou à partir de chaque position transformée initiale (px.1 à px.4) "

processus (f), processus de calcul de ladite valeur de pixel transformée (PXTR.i) en fonction des valeurs des pixels numériques dudit bloc de pixels numériques et de ladite position numérique,

lesdites informations formatées comprenant des paramètres ; lesdits paramètres permettant de choisir au moins une fonction mathématique liée à ladite transformation géométrique ; la ou lesdites fonctions mathématiques permettant de calculer ledit bloc de pixels numériques et ladite position numérique à partir de ladite position transformée.

**15.** Système selon la revendication 14 ; ledit algorithme général ou ledit algorithme optimisé étant exécuté par des moyens de traitement matériel et/ou logiciel ; ledit algorithme optimisé mettant en oeuvre exclusivement des données entières ou virgule fixe.

**16.** Système selon la revendication 14 ou 15 ; ledit système comprenant en outre des moyens de traitement informatique (MC, QU1) pour quantifier lesdites positions numériques de manière à obtenir des positions numériques quantifiées.

**17.** Système selon la revendication 16; ledit système comprenant en outre des moyens de calcul pour calculer des blocs de coefficients (Ca à Cn et CA à CN),; lesdits processus (c) et (f) étant réalisés en :

- utilisant ladite position numérique quantifiée pour sélectionner un bloc de coefficients (Ca à Cn et/ou CA à CN),
- calculant ladite valeur de pixel transformé à partir dudit bloc de coefficients et dudit bloc de pixels numériques.

**18.** Système selon l'une quelconque des revendications 14 à 17 ; les processus de calcul (c) et (f) de la valeur de pixel transformé étant également applicables à une autre transformation que ladite transformation géométrique, notamment l'atténuation du flou de ladite image.

**19.** Système selon l'une quelconque des revendications 14 à 18 ; ladite image numérique provenant d'un capteur ayant plusieurs canaux ; lesdits canaux pouvant être combinés pour produire des plans couleur (Imr à IMb) ; les processus de calcul (c) et (f) de la valeur de pixel transformé étant tels qu'ils permettent également de combiner lesdits canaux afin d'obtenir lesdits plans couleur.

**20.** Système selon l'une quelconque des revendications 14 à 19 ; ladite image numérique étant composée de plans couleur ; ledit système étant tel que, pour corriger les aberrations chromatiques, lesdits moyens de traitement informatique permettent d'appliquer à chaque plan couleur une transformation géométrique différente.

**21.** Système selon l'une quelconque des revendications 14 à 20 ; ledit système étant tel que lesdits moyens de traitement informatique permettent de combiner ladite transformation géométrique avec une autre transformation géométrique variable selon ladite image numérique, notamment un zoom.

**EP 1 523 730 B1**

22. Système selon l'une quelconque des revendications 14 à 21 ; lesdites informations formatées dépendant de caractéristiques variables selon l'image numérique, notamment la taille de ladite image numérique; ledit système comprenant en outre des moyens de traitement informatique pour déterminer la valeur desdites caractéristiques variables, pour ladite image numérique; lesdits processus (a) et (b) utilisant lesdites informations formatées dépendant de la valeur, ainsi déterminée, desdites caractéristiques variables.

23. Système selon l'une quelconque des revendications 14 à 22 ; lesdites informations formatées étant liées à des défauts de distorsion et/ou aberrations chromatiques de ladite chaîne d'appareils ; lesdits paramètres étant liés à un champ mesuré.

24. Système selon l'une quelconque des revendications 14 à 23 ; ladite image transformée présentant une différence avec l'image obtenue par application de ladite transformation géométrique à ladite image numérique; ledit système comprenant en outre de moyens de traitement informatique permettant de mettre en oeuvre un algorithme général et/ou un algorithme optimisé et/ou des points transformés initiaux de telle sorte que ladite différence soit inférieure à un seuil choisi.

25. Système selon l'une quelconque des revendications 14 à 24 ; ladite image transformée présentant une différence avec l'image obtenue par application de ladite transformation géométrique à ladite image numérique; ledit système comprenant en outre des moyens de traitement informatique permettant de mettre en oeuvre un algorithme général et/ou un algorithme optimisé et/ou des points transformés initiaux et/ou la quantification des positions numériques quantifiées de telle sorte que ladite différence soit inférieure à un seuil choisi.

26. Système selon l'une quelconque des revendications 14 à 25; ledit système comprenant en outre des moyens de traitement informatique pour trier lesdites positions transformées de telle sorte que lesdits blocs de pixels numériques sélectionnés par lesdits processus (a) et/ou (d) aient un nombre moyen de pixels numériques communs déterminé.

**Claims**

1. Method for calculating a transformed image composed of pixels referred to hereinbelow as transformed pixels (PXTR.1 to PXTR.m) from a digital image (INUM) composed of pixels referred to hereinbelow as digital pixels (PXnum.1 to PXnum.m) and from formatted information (IF) relating to a geometric transformation, especially formatted information (IF) relating to distortions and/or chromatic aberrations (P5) of an appliance chain(P3); said transformed pixel being **characterised by** a transformed position (pxtr) and a transformed value (vxtr), said method comprising the step of calculating said transformed image (ITR) from an approximation (CAPP) of said geometric transformation, the method comprising to this end the step of calculating the values (vxtr) of said transformed pixels (PXTR.1 to PXTR.m) by employing a general algorithm, as follows:

   - transformed pixels, referred to hereinbelow as initial transformed pixels (PXINIT.1 to PXINIT.4), are selected,
   - the following processes are applied in respect of said initial transformed pixels in order to obtain blocks of initial digital pixels (BPINIT.1 to BPINIT.4) and initial digital positions (pninit.1 to pninit.4):

      process (a), a process of selecting (ET1, ET2), within said digital image, from said formatted information, for each initial transformed position (px), an initial block of digital pixels (BPINIT.i),
      process (b), a process of calculating (ET3), from said formatted information (IF), for each initial transformed position (px), an initial digital position (pninit.i) within said block of digital pixels (BPINIT.i),
      process (c), a process of calculating (ET4), for said initial transformed position (px), said initial transformed pixel value as a function of the values of the digital pixels (pninit.1) of said block of digital pixels (BPINIT.i) and of said digital position (pninit.i);

   - there is applied to each transformed pixel (PXTR.i) other than the initial transformed pixels (PXINIT.1 to PXINIT.4) an optimised algorithm comprising the following processes:

      process (d), a process of selecting a block of digital pixels (BPNUM.i) within said digital image, from said initial digital blocks (BPINIT.1 to BPINIT.4), and
      process (e), a process of calculating a digital position (pnum.i) within said block of digital pixels (BPNUM.i), from said initial digital blocks and/or from each initial transformed position (px.1 to px.4),
      process (f), a process of calculating said value of transformed pixel (PXTR.i) as a function of the values of

**19**

the digital pixels of said block of digital pixels (BPNUM.i) and of said digital position (pnum.i); said formatted information containing parameters; said parameters making it possible to choose at least one mathematical function related to said geometric transformation; said mathematical function or functions making it possible to calculate said block of digital pixels and said digital position from said transformed position.

2. Method according to claim 1; said method being carried out with hardware and/or software processing means; said optimised algorithm employing exclusively integral or fixed-point data.

3. Method according to either claim 1 or claim 2; said method further comprising the step of quantising said digital positions (QU1) in order to obtain quantised digital positions.

4. Method according to claim 3; said method further comprising the step of calculating blocks of coefficients (Ca to Cn and CA to CN); said processes (c) and (f) being carried out by:

   - using said quantised digital position (QU1) to select a block of coefficients (Ca to Cn and/or CA to CN),
   - calculating said transformed pixel value from said block of coefficients and from said block of digital pixels.

5. Method according to any one of claims 1 to 4; the processes (c) and (f) for calculating the transformed pixel value also being applicable to a transformation other than said geometric transformation, especially attenuation of the blur of said image.

6. Method according to any one of claims 1 to 5; said digital image coming from a sensor having a plurality of channels; it being possible for said channels to be combined to produce colour planes (IMr to IMb); the processes (c) and (f) for calculating the transformed pixel value also allowing said channels to be combined in order to obtain said colour planes.

7. Method according to any one of claims 1 to 6; said digital image being composed of colour planes; said method being such that, in order to correct chromatic aberrations, a different geometric transformation is applied to each colour plane.

8. Method according to any one of claims 1 to 7; said method further comprising the step of combining said geometric transformation with another geometric transformation that is variable according to said digital image, especially a zoom.

9. Method according to any one of claims 1 to 8; said formatted information depending on characteristics that are variable according to the digital image, especially the size of said digital image; said method further comprising the step of determining the value of said variable characteristics for said digital image; said processes (a) and (b) using said formatted information depending on the value, so determined, of said variable characteristics; so that implementation of the method for formatted information depending on a variable characteristic comes down to implementation of the method for formatted information that does not depend on any variable characteristic.

10. Method according to any one of claims 1 to 9; said formatted information being related to distortion defects and/or chromatic aberrations of said appliance chain ; said parameters being associated with a measured field.

11. Method according to any one of claims 1 to 10; said transformed image exhibiting a difference compared with the image obtained by application of said geometric transformation to said digital image; said method further comprising the following steps:

   - the step of choosing a threshold,
   - the step of choosing the general algorithm and/or the optimised algorithm and/or the initial transformed points, so that said difference is below said threshold.

12. Method according to any one of claims 3 to 11; said transformed image exhibiting a difference compared with the image obtained by application of said geometric transformation to said digital image; said method further comprising the following steps:

   - the step of choosing a threshold,

- the step of choosing the general algorithm and/or the optimised algorithm and/or the initial transformed points and/or quantisation of the quantised digital positions, so that said difference is below said threshold.

13. Method according to any one of claims 1 to 12; said method further comprising the step of sorting said transformed positions so that said blocks of digital pixels selected by said processes (a) and/or (d) have a given average number of common digital pixels.

14. System for calculating a transformed image (ITR) composed of pixels referred to hereinbelow as transformed pixels (FXTR.1 to PXTR.m) from a digital image (INUM) composed of pixels referred to hereinbelow as digital pixels (PXnum.1 to PXnum.m) and from formatted information (IF) relating to a geometric transformation, especially formatted information relating to distortions and/or chromatic aberrations (P5) of an appliance chain (P3),
said transformed pixel being **characterised by** a transformed position (pxtr) and a transformed value (vxtr),
said system comprising calculating means (MC) for calculating said transformed image (ITR) from an approximation (CAPP) of said geometric transformation, the calculating means being used to calculate the values (vxtr) of said transformed pixels by employing

- means for selecting transformed pixels, referred to hereinbelow as initial transformed pixels (PIINIT.1 to PINIT. 4),
- data processing means containing a general algorithm comprising the following processes for said initial transformed pixels (BPINIT.1 to BPINIT.4) in order to obtain blocks of initial digital pixels (BPINIT.1 to BPINIT. 4) and initial digital positions (pninit.1 to pninit.4):

  process (a), a process of selecting, within said digital image, from said formatted information, for each initial transformed position (px), an initial block of digital pixels (BPINIT.i),
  process (b), a process of calculating, from said formatted information, for each initial transformed position (px), an initial digital position (pninit.i) within said initial block of digital pixels (BPXNIT.i),
  process (c), a process of calculating, for said transformed position, said initial transformed pixel value as a function of the values of the digital pixels of said initial block of digital pixels and of said initial digital position (pninit.i);

- data processing means for applying to each transformed pixel (PXTR.i) other than the initial transformed pixels (PXINTT.1 to PXINIT.4) an optimised algorithm comprising the following processes:

  process (d), a process of selecting a block of digital pixels (BPNUM.i) within said digital image, from said initial digital blocks (BPINIT.1 to BPINIT.4) and/or from each initial transformed position (px.1 to px.4),
  process (e), a process of calculating a digital position (pnum.i) within said block of digital pixels (BPNUM.i), from said initial digital blocks and/or from each initial transformed position (px.1 to px.4),
  process (f), a process of calculating said value of transformed pixel (PXTR.i) as a function of the values of the digital pixels of said block of digital pixels and of said digital position;
  said formatted information containing parameters;
  said parameters making it possible to choose at least one mathematical function related to said geometric transformation; said mathematical function or functions making it possible to calculate said block of digital pixels and said digital position from said transformed position.

15. System according to claim 14; said general algorithm or said optimised algorithm being executed by hardware and/or software processing means; said optimised algorithm employing exclusively integral or fixed-point data.

16. System according to claim 14 or 15; said system further comprising data processing means (MC, QU1) for quantising said digital positions in order to obtain quantised digital positions.

17. System according to claim 16; said system further comprising calculating means for calculating blocks of coefficients (Ca to Cn and CA to CN); said processes (c) and (f) being carried out by:

- using said quantised digital position to select a block of coefficients (Ca to Cn and/or CA to CN),
- calculating said transformed pixel value from said block of coefficients and from said block of digital pixels.

18. System according to any one of claims 14 to 17; the processes (c) and (f) for calculating the transformed pixel value also being applicable to a transformation other than said geometric transformation, especially attenuation of the blur of said image.

19. System according to any one of claims 14 to 18; said digital image coming from a sensor having a plurality of channels; it being possible for said channels to be combined to produce colour planes (IMr to IMb); the processes (c) and (f) for calculating the transformed pixel value being such that they also allow said channels to be combined in order to obtain said colour planes.

20. System according to any one of claims 14 to 19; said digital image being composed of colour planes; said system being such that, in order to correct chromatic aberrations, said data processing means allow a different geometric transformation to be applied to each colour plane.

21. System according to any one of claims 14 to 20; said system being such that said data processing means allow said geometric transformation to be combined with another geometric transformation that is variable according to said digital image, especially a zoom.

22. System according to any one of claims 14 to 21; said formatted information depending on characteristics that are variable according to the digital image, especially the size of said digital image; said system further comprising data processing means for determining the value of said variable characteristics for said digital image; said processes (a) and (b) using said formatted information depending on the value, so determined, of said variable characteristics.

23. System according to any one of claims 14 to 22; said formatted information being related to distortion defects and/or chromatic aberrations of said appliance chain ; said parameters being associated with a measured field.

24. System according to any one of claims 14 to 23; said transformed image exhibiting a difference compared with the image obtained by application of said geometric transformation to said digital image; said system further comprising data processing means permitting implementation of a general algorithm and/or an optimised algorithm and/or the initial transformed points, so that said difference is below a chosen threshold.

25. System according to any one of claims 14 to 24; said transformed image exhibiting a difference compared with the image obtained by application of said geometric transformation to said digital image; said system further comprising data processing means permitting implementation of a general algorithm and/or an optimised algorithm and/or the initial transformed points and/or quantisation of the quantised digital positions, so that said difference is below a chosen threshold.

26. System according to any one of claims 14 to 25; said system further comprising data processing means for sorting said transformed positions so that said blocks of digital pixels selected by said processes (a) and/or (d) have a given average number of common digital pixels.

**Patentansprüche**

1. Verfahren zur Berechnung eines transformierten Bildes bestehend aus Pixeln, nachstehend als transformierte Pixel (PXTR.1 bis PXTR.m) bezeichnet, aus einem digitalen Bild (INUM) bestehend aus Pixeln, nachstehend als digitale Pixel (PXnum.1 bis PXnum.m) bezeichnet, und formatierten Informationen (IF) betreffend eine geometrische Transformation, insbesondere formatierte Informationen (IF) betreffend die Verzerrung und/oder chromatische Aberration (P5) einer Verkettung von Geräten (P3);
wobei die transformierten Pixel **gekennzeichnet sind durch** eine transformierte Position (pxtr) und einen transformierten Wert (vxtr),
und das Verfahren den Schritt der Berechnung des transformierten Bildes (ITR) aus einer Näherung (CAPP) der geometrischen Transformation umfasst und das Verfahren hierzu den Schritt der Berechnung der Werte (vxtr) der transformierten Pixel (PXTR.1 bis PXTR.m) **durch** Ausführung eines allgemeinen Algorithmus in folgender Art umfasst:

- man wählt transformierte Pixel, nachfolgend transformierte Ausgangspixel genannt (PXINIT.1 bis PXINIT.4) genannt,
- man wendet die folgenden Verfahren auf die transformierten Ausgangspixel an, um Blöcke von digitalen Ausgangspixeln (BPINIT.1 bis BPINIT.4) und die digitalen Ausgangspositionen (pninit.1 bis pninit.4) zu erhalten:

Verfahren (a), Verfahren zur Auswahl (ET1, ET2) eines Ausgangsblocks von digitalen Pixeln (BPINIT.i) im digitalen Bild aus den formatierten Informationen für jede transformierte Ausgangsposition (px),

Verfahren (b), Verfahren zur Berechnung (ET3) einer digitalen Ausgangsposition (pninit.i) im Block von digitalen Pixeln (BPINIT.i) aus den formatierten Informationen (IF) für jede transformierte Ausgangsposition (px),

Verfahren (c), Verfahren zur Berechnung (ET4) des transformierten Ausgangspixelwertes für die transformierte Ausgangsposition (px) in Abhängigkeit der Werte der digitalen Pixel (pninit.1) des Blocks von digitalen Pixeln (BPINIT.i) und der digitalen Position (pninit.i);

- man wendet auf jedes transformierte Pixel (PXTR.i) mit Ausnahme der transformierten Ausgangspixel (PXINIT. 1 bis PXINIT. 4) einen optimierten Algorithmus an, der die folgenden Verfahren umfasst:

Verfahren (d), Verfahren zur Auswahl eines Blocks von digitalen Pixeln (BPNUM.i) im digitalen Bild ausgehend von digitalen Ausgangsblocks (BPINIT.1 bis BPINIT.4), und

Verfahren (e), Verfahren zur Berechnung einer digitalen Position (pnum.i) im Block digitaler Pixel (BPNUM.i) ausgehend von den digitalen Ausgangsblocks und/oder ausgehend von jeder transformierten Ausgangsposition (px.1 bis px.4), Verfahren (f), Verfahren zur Berechnung des transformierten Pixelwerts (PXTR.i) in Abhängigkeit der digitalen Pixelwerte des digitalen Pixelblocks (BPNUM.i) und der digitalen Position (pnum.i),

wobei die formatierten Informationen Parameter umfassen, die die Auswahl zumindest einer mathematischen Funktion erlauben, die mit der geometrischen Transformation im Zusammenhang steht, und wobei die mathematische (n) Funktion(en) die Berechnung des digitalen Pixelblocks und der digitalen Position ausgehend von der transformierten Position erlauben.

2. Verfahren nach Anspruch 1, wobei das Verfahren durch Hard- und/oder Software umgesetzt wird und der optimierte Algorithmus ausschließlich ganzzahlige Daten oder Daten im Festkommaformat verwendet.

3. Verfahren nach Anspruch 1 oder 2, das außerdem den Schritt der Quantifizierung der digitalen Positionen (QU1) umfasst, um quantifizierte digitale Positionen zu erhalten.

4. Verfahren nach Anspruch 3, das außerdem den Schritt der Berechnung von Blocks von Koeffizienten (Ca bis Cn und CA bis CN) umfasst und die Verfahren (c) und (f) ausgeführt werden:

- unter Verwendung der quantifizierten digitalen Position (QU1) zur Auswahl eines Koeffizientenblocks (Ca bis Cn und/oder CA bis CN),
- durch Berechnung des Wertes der transformierten Pixel ausgehend von besagtem Koeffizientenblock und den digitalen Pixelblocks.

5. Verfahren nach einem der Ansprüche 1 bis 4, wobei die Berechnungsverfahren (c) und (f) des transformierten Pixelwerts auch auf eine andere Transformation als die besagte geometrische Transformation anwendbar sind, insbesondere auf die Milderung der Unschärfe des Bilds.

6. Verfahren nach einem der Ansprüche 1 bis 5, wobei das digitale Bild von einem Sensor mit mehreren Kanäle stammt, die Kanäle kombiniert werden können, um Farbebenen (IMr bis IMb) zu erstellen, und die Berechnungsverfahren (c) und (f) des transformierten Pixelwertes auch die Kombination der Kanäle erlauben, um die Farbebenen zu erhalten.

7. Verfahren nach einem der Ansprüche 1 bis 6, wobei das digitale Bild aus Farbebenen besteht und das Verfahren derart durchgeführt wird, dass zur Korrektur der chromatischen Aberration auf jede Farbebene eine andere geometrische Transformation angewendet wird.

8. Verfahren nach einem der Ansprüche 1 bis 7, wobei das Verfahren außerdem den Schritt der Kombination der geometrischen Transformation mit einer anderen variablen geometrischen Transformation je nach digitalem Bild umfasst, insbesondere mit einem Zoom.

9. Verfahren nach einem der Ansprüche 1 bis 8 wobei die formatierten Informationen von variablen Merkmalen je nach digitalem Bild abhängen, insbesondere von der Größe des digitalen Bildes, und das Verfahren außerdem den Schritt der Ermittlung des Wertes der variablen Merkmale für das digitale Bild umfasst und die Verfahren (a) und (b) die formatierten, vom Wert der variablen Merkmale abhängigen, so ermittelten Informationen nutzen,

so dass die Ausführung des Verfahrens für formatierte Informationen, die von einem variablem Merkmal abhängen, zurückgeführt werden auf die Durchführung des Verfahrens für formatierte Informationen, die von keinem variablen Merkmal abhänge.

10. Verfahren nach einem der Ansprüche 1 bis 9, wobei die formatierten Informationen verknüpft sind mit Verzerrungsfehlern und/oder der chromatischen Aberration der Verkettung von Geräten und die Parameter verknüpft sind mit einer gernessenen Feldstärke.

11. Verfahren nach einem der Ansprüche 1 bis 10, wobei das transformierte Bild eine Differenz zu dem durch die Anwendung der geometrischen Transformation auf das digitale Bild erhaltene Bild aufweist und das Verfahren außerdem die folgenden Schritte umfasst:

- den Schritt der Auswahl eines Schwellenwertes,
- den Schritt der Auswahl des allgemeinen Algorithmus und/oder des optimierten Algorithmus und/der der transformierten Ausgangspunkte, so dass die genannte Differenz kleiner als der genannte Schwellenwert ist.

12. Verfahren nach einem der Ansprüche 3 bis 11, wobei das transformierte Bild eine Differenz zu dem Bild aufweist, das durch Anwendung der geometrischen Transformation auf das digitale Bild erhalten wurde, und das Verfahren außerdem die folgenden Schritte aufweist:

- den Schritt der Auswahl eines Schwellenwertes,
- den Schritt der Auswahl des allgemeinen Algorithmus und/oder des optimierten Algorithmus und/oder der transformierten Ausgangspunkte und/oder der Quantifizierung der quantifizierten digitalen Positionen, so dass die Differenz kleiner als der Schwellenwert ist.

13. Verfahren nach einem der Ansprüche 1 bis 12, wobei das Verfahren außerdem den Schritt der Auswahl der transformierten Positionen derart umfasst, dass die digitalen Pixelblocks, die von den Verfahren (a) und/oder (d) ausgewählt wurden, eine gemeinsame vorgegebene mittlere digitale Pixelzahl haben.

14. System zur Transformation eines Bildes bestehend aus Pixeln, nachstehend als transformierte Pixel (PXTR.1 bis PXTR.m) bezeichnet, aus einem digitalen Bild (INUM) bestehend aus Pixeln, nachstehend als digitale Pixel (PXnum. 1 bis PXnum.m) bezeichnet, und formatierten Informationen (IF) betreffend eine geometrische Transformation, insbesondere formatierte Informationen (IF) betreffend die Verzerrung und/oder chromatische Aberration (P5) einer Verkettung von Geräten (P3),

wobei die transformierten Pixel **gekennzeichnet sind durch** eine transformierte Position (pxtr) und einen transformierten Wert (vxtr),

und das System Rechenmittel zur Berechnung (MC) des transformierten Bildes (ITR) aus einer Näherung (CAPP) der geometrischen Transformation aufweist,

wobei die Rechenmittel benutzt werden, um die Werte (vxtr) der transformierten Pixel zu berechnen **durch** Einsatz von:

- Mitteln zur Auswahl von transformierten Pixeln, nachfolgend transformierte Ausgangspixel genannt (PXINIT. 1 bis PXINIT.4) genannt,
- Mitteln zur Datenverarbeitung mit einem allgemeinen Algorithmus, der die folgenden Verfahren zur Anwendung auf die transformierten Ausgangspixel (BPINIT.1 bis BPINIT.4) aufweist, um Blöcke von digitalen Ausgangspixeln (BPINIT.1 bis BPINIT.4) und digitale Ausgangspositionen (pninit.1 bis pninit.4) zu erhalten:

Verfahren (a), Verfahren zur Auswahl eines Ausgangsblocks von digitalen Pixeln (BPINIT.i) im digitalen Bild aus den formatierten Informationen für jede transformierte Ausgangsposition (px),

Verfahren (b), Verfahren zur Berechnung einer digitalen Ausgangsposition (pninit.i) im Block von digitalen Pixeln (BPINIT.i) aus den formatierten Informationen für jede transformierte Ausgangsposition (px),

Verfahren (c), Verfahren zur Berechnung des transformierten Ausgangspixelwertes für die transformierte Ausgangsposition in Abhängigkeit der Werte der digitalen Pixel des Blocks von digitalen Pixeln (BPINIT.i) und der digitalen Position (pninit.i);

- Mittel zur Datenverarbeitung zur Anwendung eines optimierten Algorithmus auf jedes transformierte Pixel (PXTR.i) mit Ausnahme der transformierten Ausgangspixel (PXINIT. 1 bis PXINIT. 4), der die folgenden Verfahren umfasst:

> Verfahren (d), Verfahren zur Auswahl eines Blocks von digitalen Pixeln (BPNUM.i) im digitalen Bild ausgehend von digitalen Ausgangsblocks (BPINIT.1 bis BPINIT.4) und/oder aus jeder transformierten Ausgangsposition (px.1 bis px.4)"
> Verfahren (e), Verfahren zur Berechnung einer digitalen Position (pnum.i) im Block digitaler Pixel (BPNUM.i) ausgehend von den digitalen Ausgangsblocks und/oder ausgehend von jeder transformierten Ausgangsposition (px.1 bis px.4), Verfahren (f), Verfahren zur Berechnung des transformierten Pixelwerts (PXTR.i) in Abhängigkeit der digitalen Pixelwerte des digitalen Pixelblocks und der digitalen Position;

wobei die formatierten Informationen Parameter umfassen, die die Auswahl zumindest einer mathematischen Funktion erlauben, die mit der geometrischen Transformation im Zusammenhang steht, und wobei die mathematische (n) Funktion(en) die Berechnung des digitalen Pixelblocks und der digitalen Position ausgehend von der transformierten Position erlauben.

15. System nach Anspruch 14, wobei der allgemeine oder optimierte Algorithmus ausgeführt wird durch Hard- und/oder Softwaremittel und der optimierte Algorithmus ausschließlich ganzzahlige Daten oder Daten im Festkommaformat verwendet.

16. System nach Anspruch 14 oder 15, das außerdem Mittel zur Datenverarbeitung (MC, QU1) zur Quantifizierung der digitalen Positionen aufweist, um quantifizierte digitale Positionen zu erhalten.

17. System nach Anspruch 16 das außerdem Berechnungsmittel zur Berechnung von Blocks von Koeffizienten (Ca bis Cn und CA bis CN) aufweist, und die Verfahren (c) und (f) ausgeführt werden:

    - unter Verwendung der quantifizierten digitalen Position zur Auswahl eines Koeffizientenblocks (Ca bis Cn und/ oder CA bis CN),
    - durch Berechnung des Wertes der transformierten Pixel ausgehend von besagtem Koeffizientenblock und des digitalen Pixelblocks.

18. System nach einem der Ansprüche 14 bis 17, wobei die Berechnungsverfahren (c) und (f) des transformierten Pixelwerts auch auf eine andere Transformation als die besagte geometrische Transformation anwendbar sind, insbesondere auf die Milderung der Unschärfe des Bilds.

19. System nach einem der Ansprüche 14 bis 18, wobei das digitale Bild von einem Sensor mit mehreren Kanäle stammt, die Kanäle kombiniert werden können, um Farbebenen (IMr bis IMb) zu erstellen, und die Berechnungsverfahren (c) und (f) des transformierten Pixelwertes auch die Kombination der Kanäle erlauben, um die Farbebenen zu erhalten.

20. System nach einem der Ansprüche 14 bis 19, wobei das digitale Bild aus Farbebenen besteht und das System derart ausgestaltet ist, dass es die Mittel zur Datenverarbeitung zur Korrektur der chromatischen Aberration erlauben, auf jede Farbebene eine andere geometrische Transformation anzuwenden.

21. System nach einem der Ansprüche 14 bis 20, wobei das System derart ausgestaltet ist, dass die Mittel zur Datenverarbeitung es erlauben, die geometrische Transformation mit einer anderen, je nach dem digitalen Bild variablen, gemetrischen Transformation zu kombinieren, insbesondere mit einem Zoom.

22. System nach einem der Ansprüche 14 bis 21, wobei die formatierten Informationen von variablen Merkmalen je nach digitalem Bild abhängen, insbesondere von der Größe des digitalen Bildes, und das System außerdem Mittel zur Datenverarbeitung zur Ermittlung des Wertes der variablen Merkmale für das digitale Bild umfasst und die Verfahren (a) und (b) die formatierten, vom Wert der variablen Merkmale abhängigen, so ermittelten Informationen nutzen.

23. System nach einem der Ansprüche 14 bis 22, wobei die formatierten Informationen verknüpft sind mit Verzerrungsfehlern und/oder der chromatischen Aberration der Verkettung von Geräten und die Parameter verknüpft sind mit einer gemessenen Feldstärke.

**24.** System nach einem der Ansprüche 14 bis 23, wobei das transformierte Bild eine Differenz zu dem durch die Anwendung der geometrischen Transformation auf das digitale Bild erhaltene Bild aufweist und das System außerdem Mittel zur Datenverarbeitung aufweist, die es erlauben, einen allgemeinen Algorithmus und/oder einen optimierten Algorithmus und/oder transformierte Ausgangspunkte zu implementieren, so dass die genannte Differenz kleiner als ein gewählter Schwellenwert ist.

**25.** System nach einem der Ansprüche 14 bis 24, wobei das transformierte Bild eine Differenz zu dem Bild aufwiest, das durch Anwendung der geometrischen Transformation auf das digitale Bild erhalten wurde, und das System außerdem Mittel zur Datenverarbeitung aufweist, die es erlauben, einen allgemeinen Algorithmus und/oder einen optimierten Algorithmus und/oder transformierte Ausgangspunkte und/oder die Quantifizierung der quantifizierten digitalen Positionen zu implementieren, so dass die Differenz kleiner als ein gewählter Schwellenwert ist.

**26.** System nach einem der Ansprüche 14 bis 25, wobei das System außerdem Mittel zur Datenverarbeitung zur Auswahl der transformierten Positionen derart umfasst, dass die digitalen Pixelblocks, die von den Verfahren (a) und/oder (d) ausgewählt wurden, eine gemeinsame vorgegebene mittlere digitale Pixelzahl haben.

PX num.1     INUM     PXTR.1     ITR

CAPP

PXnum.m
(pxnum,vxnum)

PXTR.m
(pxtr,vxtr)

**Fig_1**

IF

BPNUM.i

x

PXTR.i
pxtr.i, vxtr.i

INUM     ITR

IF

PXnum.1

PXFIC
(pxnum.i )

i
X

BPNUM.i    **Fig_2a**

**Fig_2b**      **Fig_2c**      **Fig_2d**

# FIG_3

POSITION pxtr.i     ET1

SELECTION D'UN
BLOC   BPNUM.i     ET2

POSITION pnum.i     ET3

CALCUL VALEUR
du pixel   PXFIC     ET4

# FIG_4

BPNUM.i

PXFIC

(pxnum.i)

a
b
c
d
—
—
—
—
n

QU1

a1 a2      Ca

ap

b1 b2      Cb

bp

n1 n2      Cn

np

```
        ┌─────────────────────────┐
        │  CHOIX de PXINIT.1/4     │
        └─────────────────────────┘
                    │
    ┌──────────────▶│
    │               ▼
    │       ┌─────────────────────┐
    │       │  POSITION pxtr.i    │ ─── ET1
    │       └─────────────────────┘
    │               │
    │               ▼
    │       ┌─────────────────────┐
    │       │  SELECTION D'UN      │ ─── ET2
    │       │  BLOC  BPNUM.i       │
    │       └─────────────────────┘
    │               │
    │               ▼
    │       ┌─────────────────────┐
    │       │  POSITION pnum.i    │ ─── ET3
    │       └─────────────────────┘
    │               │
    │               ▼
    │       ┌─────────────────────┐
    │       │  CALCUL VALEUR       │ ─── ET4
    │       │  du pixel  PXFIC     │
    │       └─────────────────────┘
    │               │
    │               ▼
    │          ╱─────────╲
    │   OUI   ╱   Autre    ╲
    └────────┤             ├─── ET5
             ╲   INIT ?   ╱
              ╲─────────╱
                   │
                  NON
                   ▼
        ┌─────────────────────┐
        │  SELECTION de        │ ─── ET6
        │  PXTR.i              │
        └─────────────────────┘
                   │
                   ▼
        ┌─────────────────────┐
        │  LOCALISATION        │ ─── ET7
        │  RELATIVE DE PXTR.i  │
        └─────────────────────┘
                   │
                   ▼
        ┌─────────────────────┐
        │  LOCALISATION d'un   │ ─── ET8
        │  BPNUM.i             │
        └─────────────────────┘
                   │
                   ▼
        ┌─────────────────────┐
        │  LOCALISATION d'un   │ ─── ET9
        │  pnum et d'un PXFIC  │
        └─────────────────────┘
                   │
                   ▼
        ┌─────────────────────┐
        │  CALCUL VALEUR       │ ─── ET10
        │  DE PXFIC            │
        └─────────────────────┘
```

# Fig_ 5a

29

## FIG_5b

## FIG_5c

# FIG_6

FIG_7

# FIG_8

BPNUM.1

BPNUM.2

PXTR.1   PXTR.2

PXTR.3

INUM

ITR

# FIG_9a

IMrvb

| V | R | V | B | V |
|---|---|---|---|---|
| R | V | B | V |   |
| V | B | V | R |   |
| R | V |   |   |   |
| V |   |   |   |   |

IMr

IMv

IMb

ITRr

ITRv

ITRb

**Fig_9b**

# FIG_10

P5

IF

P25

P3

# FIG_11

INUM

IMAGE
NUMERIQUE

IF

INFORMATIONS
FORMATEES

VCV

VALEUR DES
CARACTERISTIQUES
VARIABLES

MC

MOYENS
DE CALCUL

MTI

IMAGE
TRANSFORMEE

ITR

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4695964 A
- WO 03007239 A1